# EUROPÄISCHE PATENTSCHRIFT

(11) **EP 4 110 659 B1**
(45) Veröffentlichungstag und Bekanntmachung des Hinweises auf die Patenterteilung: **15.04.2026**
(21) Anmeldenummer: 21703199.6
(22) Anmeldetag: 02.02.2021
(51) Int. Cl.: B60S 1/54, B60S 1/56, B08B 5/02, G02B 27/00

(54) **VERFAHREN ZUM BETREIBEN EINES REINIGUNGSSYSTEMS, REINIGUNGSSYSTEM**
METHOD FOR OPERATING A CLEANING SYSTEM, AND CLEANING SYSTEM
PROCÉDÉ PERMETTANT DE FAIRE FONCTIONNER UN SYSTÈME DE NETTOYAGE ET SYSTÈME DE NETTOYAGE

(30) Priorität: 25.02.2020 DE 102020104875
(43) Veröffentlichungstag der Anmeldung: 04.01.2023
(73) Patentinhaber: ZF CV Systems Global GmbH, 3006 Bern (CH)
(72) Erfinder: FIEBRANDT, Jan, 30171 Hannover (DE); RICKE, Janik, 31311 Uetze (DE)
(74) Vertreter: Ohlendorf, Henrike
(86) Internationale Anmeldenummer: PCT/EP2021/052345
(87) Internationale Veröffentlichungsnummer: WO 2021/170347

(56) Entgegenhaltungen:
- WO-A1-2019/238764
- DE-A1- 102018 113 386
- DE-A1- 102018 121 812
- DE-A1- 102018 122 315
- DE-A1- 102019 111 372
- US-A1- 2018 354 469
- US-A1- 2019 077 376
- US-A1- 2019 077 377

## Beschreibung

Die Erfindung betrifft in einem ersten Aspekt ein Verfahren zum Betreiben eines Reinigungssystems gemäß dem Oberbegriff des Anspruchs 1. Die Erfindung betrifft in einem zweiten Aspekt ein Reinigungssystem gemäß dem Anspruch 18. Die Erfindung betrifft in einem dritten Aspekt ein Fahrzeug gemäß dem Anspruch 22.

Reinigungssysteme und Verfahren zur Reinigung von Sensoroberflächen und dergleichen Oberflächen, insbesondere im Bereich von Fahrzeugen, sind allgemein bekannt.

Die DE 10 2017 010 254 A1 beschreibt eine Reinigungsvorrichtung zum selektiven Beaufschlagen einer Oberfläche mit einer Mediumssequenz aus mindestens einem ersten, insbesondere gasförmigen, Medium und einem zweiten, insbesondere flüssigen, Medium, aufweisend: eine Düse, ausgebildet zum Beaufschlagen der Oberfläche mit dem zweiten Medium, ein Reinigungsventil mit einem Halteanschluss, einem Druckanschluss, einem Stempel und einem Druckauslass.

Neben diesem grundsätzlich vorteilhaften Ansatz führt der Einsatz eines flüssigen Mediums zur Reinigung zu dem Problem, dass bei regelmäßiger Nutzung der Reinigungsvorrichtung ein ausreichend großer Vorratstank vorgesehen werden muss. Hierbei entsteht ein Zielgrößenkonflikt aufgrund der insbesondere bei Fahrzeugen herrschenden Bauraum- und Gewichtsbeschränkungen.

Auch wird bei einer Reinigung mit einem flüssigen Medium in der Regel für einen kurzen Zeitraum das Messsignal des Sensors, insbesondere ein Kamerabild, beeinträchtigt.

Die DE 10 2012 218 583 A1 beschreibt eine Kamerawaschvorrichtung mit einer Luftpumpe, einem Waschwassertank, der Waschwasser speichert, einer Sprühdüse mit einem Sprühabschnitt, einem Zusammenführungs-Anschlussstück, das eine Hochdruckluftpassage und eine Waschwasserpassage aufweist, und einem elektromagnetischen Ventil. Die Luftpumpe erzeugt und liefert Hochdruckluft zu der Hochdruckluftpassage. Wenn der Steuerteil das elektromagnetische Ventil anweist, sodass es in einen Offenzustand geschaltet wird, werden das Waschwasser und die Hochdruckluft in dem Zusammenführungs-Anschlussstück gemischt, sodass Wasserpartikel erzeugt werden. Die erzeugten Wasserpartikel werden der Sprühdüse zugeführt.

Die EP 2 873 572 A1 offenbart eine Reinigungsvorrichtung für eine fahrzeugmontierte Kamera, welche eine Lichtscheiben-Fläche, montiert an einem Fahrzeug, reinigt, die Reinigungsvorrichtung umfasst: eine Düse, die eine Abgabeöffnung hat, von welcher eine Reinigungs-Flüssigkeit und komprimierte Luft abgegeben ist, und welche positioniert ist, sodass sie der Lichtscheiben-Fläche zugewandt ist, und einen Reinigungs-Flüssigkeits-Pfad, welcher die Reinigungs-Flüssigkeit zu der Abgabeöffnung führt, und einen Luftdurchgang hat, der konfiguriert ist um die komprimierte Luft zu der Abgabeöffnung zu führen, in welcher ein ferner Endabschnitt des Reinigungs-Flüssigkeits-Pfads und ein ferner Endabschnitt des Luftdurchgangs positioniert sind, sodass diese benachbart zueinander sind oder dass diese miteinander vereinigt sind; einen Reinigungs-Flüssigkeits-Zufuhrabschnitt, welcher die Reinigungs-Flüssigkeit durch eine Reinigungs-Flüssigkeits-Leitung zu der Düse zuführt; wobei der Steuerabschnitt eine Reinigung mit einem Kontinuierlich-Wasser-Zufuhr-Modus durchführt, in welchem der Reinigungs-Flüssigkeits-Zufuhrabschnitt angetrieben ist, und der komprimierte Luft-Zufuhrabschnitt ist für einen Mehrzahl von Zeitpunkten stoßweise angetrieben um die Reinigungs-Flüssigkeit und den komprimierten Luft-Strahl von der Abgabeöffnung auszuführen, wodurch die Reinigungs-Flüssigkeit auf die Lichtscheiben-Fläche getropft ist.

Bei den genannten Ansätzen ist das Problem einer wassersparenden Reinigung bereits generell erkannt und wird in DE 10 2012 218 583 A1 durch die zur Mischung von Luft in einen Wasserstrahl und in EP 2 873 572 A1 durch die Erzeugung eines Wassernebels berücksichtigt.

Weiter beschreibt EP 3168094 A1 ein System zum Reinigen einer externen, am Fahrzeug montierten Sensoroberfläche, aufweisend: eine Luftdüse, welche dazu ausgerichtet ist, Luft auf eine Sensoroberfläche auszugeben; eine Luftpumpe, welche einen Fluideinlass, einen Luftauslass, eine Luft-Fluid-Grenzfläche und eine variable Volumenkompressionskammer, welche mit dem Luftauslass kommuniziert, aufweist; wobei es weiterhin aufweist:
eine Luftflusssteuerungseinrichtung, welche mit der Luftdüse und dem Luftauslass kommuniziert, um den Luftfluss dadurch zu steuern; und eine Flüssigkeitspumpe, welche mit dem Fluideinlass kommuniziert, um einen Fluss von unter Druck stehender Flüssigkeit liefert, so dass sich das Volumen der Kompressionskammer ändert, um ein Volumen von Druckluft mit einem Absolutdruck unter 10 bar zu erzeugen.

In dem in EP 3168094 A1 beschriebenen Ansatz wird ebenfalls der Flüssigkeitsverbrauch thematisiert und generell die Möglichkeit unterschiedlicher Reinigungszyklen beschrieben. WO-A-2019/238764 offenbart auch ein ähnliches Verfahren zum Betreiben eines Reinigungssystems.

Problematisch ist jedoch weiterhin, eine effektive Reinigung unter möglichst geringem Flüssigkeitsverbrauch zu ermöglichen. Wünschenswert wäre es, ein Reinigungsverfahren anzugeben, dass zumindest eines der im Stand der Technik vorhandenen Nachteile verbessert.

An dieser Stelle setzt die Erfindung an, deren Aufgabe es ist, in verbesserter Weise ein Verfahren anzugeben, und insbesondere eine effektive Reinigung einer Sensoroberfläche bei möglichst geringem Flüssigkeitsverbrauch ermöglicht.

Die Aufgabe, betreffend das Verfahren, wird mit einem Verfahren gemäß dem Anspruch 1 gelöst.

Die Erfindung geht aus von einem Verfahren zum Betreiben eines Reinigungssystems zum Reinigen einer Sensoroberfläche eines Sensors eines Fahrzeugs, insbesondere eines optischen Sensors, aufweisend den Schritt:
- Beaufschlagen der Sensoroberfläche mit einer Druckluftmenge in einem Luft-Reinigungsschritt.

Erfindungsgemäß ist bei dem Verfahren das Prüfen eines Luft-Reinigungsergebnisses in einem Prüfschritt vorgesehen, wobei bei einem negativen Luft-Reinigungsergebnis das Durchführen eines hybriden Reinigungsschrittes erfolgt, aufweisend:
- Beaufschlagen der Sensoroberfläche mit einer Reinigungsfluidmenge in einem Fluid-, insbesondere Flüssigkeits-, Reinigungsschritt und
- Beaufschlagen der Sensoroberfläche mit einer Druckluftmenge in einem weiteren Luft-Reinigungsschritt.

Die Erfindung geht aus von Überlegung, dass ein Einsparen von Flüssigkeit, insbesondere eines Reinigungsfluids, insbesondere bei Fahrzeugen grundsätzlich vorteilhaft ist. Die Erfindung schließt die Erkenntnis ein, dass eine Reinigung mittels Luft, insbesondere Druckluft, einer Flüssigkeitsreinigung generell vorzuziehen ist, weil bei einem Luft-Reinigungsschritt kein Reinigungsfluid verbraucht wird und die Beeinträchtigung des Sensorsignals, insbesondere eines Kamerabildes, während der Reinigung geringer ist als bei einem Fluid-, insbesondere Flüssigkeit-Reinigungsschritt. Die Erfindung hat dabei erkannt, dass jedoch bei größeren Verschmutzungen eine Reinigung lediglich mittels Luft nicht ausreichend sein kann. Ein Reinigungsfluid ist insbesondere eine Reinigungsflüssigkeit, kann aber beispielsweise auch durch ein Gas- WasserGemisch in Form eines Sprühnebels gebildet sein. Ein Reinigungsfluid kann insbesondere ein Frostschutzmittel aufweisen.

Die Erfindung hat erkannt, dass es vorteilhaft ist, das Reinigungsverfahren in Abhängigkeit eines Reinigungsergebnisses, also in Abhängigkeit eines Prüfschrittes, zu steuern, um auf diese Weise ein - an Bord eines Fahrzeugs begrenzt vorhandenes - Reinigungsfluid sparsam einzusetzen, insbesondere nur dann, wenn eine Reinigung mit Druckluft nicht erfolgreich ist.

Indem anschließend an das Beaufschlagen der Sensoroberfläche mit einem Druckluftimpuls ein Prüfen des Luft-Reinigungsergebnisses erfolgt und erst bei einem negativen Luft-Reinigungsergebnis ein hybrider Reinigungsschritt erfolgt, wird vorteilhaft eine bedarfsgerechte Reinigung der Sensoroberfläche ermöglicht. Nur wenn das Luft-Reinigungsergebnis negativ ist, das heißt wenn das Beaufschlagen der Sensoroberfläche lediglich mit einem Druckluftimpuls nicht zu einer ausreichenden Reinigung geführt hat, erfolgt eine weitergehende Reinigung in einem hybriden Reinigungsschritt, welcher das Beaufschlagen der Sensoroberfläche mit einem Reinigungsfluid und/oder mit einem Druckluftimpuls beinhaltet.

Auf diese Weise wird das - begrenzt vorhandene - Reinigungsfluid wirtschaftlich eingesetzt und gleichzeitig eine effektive Reinigung der Sensoroberfläche gewährleistet.

Das Prüfen eines Reinigungsergebnisses, insbesondere des Luft-Reinigungsergebnisses, in einem Prüfschritt kann insbesondere durch das Empfangen eines Reinigungssignals erfolgen, welches angibt, ob eine Reinigung aufgrund einer vorliegenden Verschmutzung des Sensors erforderlich ist.

Der Fluid-Reinigungsschritt muss nicht notwendigerweise ein Beaufschlagen ausschließlich mit Flüssigkeit beinhalten, sondern kann in Weiterbildungen beinhalten, dass die Reinigungsfluidmenge ein Reinigungs-Gemisch, insbesondere ein Sprühnebel, ist, das ein Reinigungsfluid und Luft umfasst, welches vermischt wird, insbesondere bevor das Reinigungs-Gemisch auf die Sensoroberfläche geleitet wird.

Die Erfindung führt in einem zweiten Aspekt auf ein Reinigungssystem zum Reinigen einer Sensoroberfläche eines Sensors, insbesondere eines optischen Sensors, in einem Fahrzeug, aufweisend eine Reinigungsvorrichtung und ein Steuergerät, ausgebildet zum Ausführen eines Verfahrens gemäß dem ersten Aspekt der Erfindung. Insbesondere ist das Reinigungssystem mit einem Fahrzeugbus und/oder einer sonstigen Kommunikationsleitung des Fahrzeugs signalführend verbunden, um Information bezüglich des Reinigungsverfahrens zu erhalten und/oder zu senden.

Die Erfindung führt in einem dritten Aspekt auf ein Fahrzeug mit einem Reinigungssystem gemäß dem zweiten Aspekt der Erfindung.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist vorgesehen, dass das Beaufschlagen der Sensoroberfläche mit einer Druckluftmenge in dem weiteren Luft-Reinigungsschritt anschließend an den Fluid-, insbesondere Flüssigkeits-, Reinigungsschritt erfolgt. In einer derartigen Reihenfolge kann die Sensoroberfläche in dem hybriden Reinigungsschritt effektiv gereinigt werden, insbesondere indem zuerst Verschmutzungen durch ein Reinigungsfluid aufgeweicht werden, und anschließend die aufgeweichten Verschmutzungsrückstände durch die Druckluftmenge entfernt werden.

Nach der Erfindung ist es vorgesehen, dass durchgeführte Fluid-, insbesondere Flüssigkeits-, Reinigungsschritte erfasst werden,
- eine Zyklenzahl von durchgeführten Fluid-, insbesondere Flüssigkeits-, Reinigungsschritten erfasst wird, die nach jedem Fluid-, insbesondere Flüssigkeits-, Reinigungsschritt erhöht wird. Eine Erfassung einer Zyklenzahl ermöglicht vorteilhaft die Steuerung des Verfahrens, insbesondere die Bestimmung einer Restzyklenzahl und/oder einer Gesamtzyklenzahl zur Bestimmung einer Restbetriebsdauer.

Nach der Erfindung ist es vorgesehen, dass
- die Reinigungsfluidmenge abhängig ist von einer Zyklenzahl derart, dass
- eine höhere Zyklenzahl zu einer größeren Reinigungsfluidmenge führt, wobei insbesondere
- die Reinigungsfluidmenge bis zu einer Maximal-Reinigungsfluidmenge erhöht wird.

Die Erfassung der Zyklenzahl innerhalb einer Durchführung des Verfahrens ermöglicht die Einstellung einer Reinigungsfluidmenge in Abhängigkeit der bereits erfolgten Fluid-, insbesondere Flüssigkeits-, Reinigungsschritte. Gemäß dem Konzept der Erfindung kann durch eine derartige Einstellung der Reinigungsfluidmenge zunächst versucht werden, eine Reinigung der Sensoroberfläche mit einer Start- Reinigungsfluidmenge mit möglichst wenig Reinigungsfluid zu erreichen, um dann erst, wenn dies nicht erfolgreich ist, die Reinigungsfluidmenge zur Verbesserung der Reinigungswirkung zu erhöhen, insbesondere schrittweise bis zu einer Maximal-Reinigungsfluidmenge. Die Erhöhung kann linear, das heißt bei jedem Zyklus um einen konstanten Betrag, oder nicht linear, beispielsweise durch eine Verdopplung bei jedem Zyklus, erfolgen. Eine Erhöhung, insbesondere eine lineare Erhöhung, der Reinigungsfluidmenge kann beispielsweise in Schritten zwischen 2 ml und 20 ml erfolgen. Eine Maximal-Reinigungsfluidmenge kann beispielsweise zwischen 25 ml und 100 ml, bevorzugt bei 40 ml, liegen. Eine Start- Reinigungsfluidmenge kann insbesondere zwischen 2 ml und 20 ml, bevorzugt zwischen 3 und 8 ml, betragen. Bei der Wahl der Reinigungsfluidmengen kann insbesondere die Größe der zu reinigen Fläche berücksichtigt werden, derart, dass eine größere Fläche eine größere Reinigungsfluidmenge benötigt.

Durch eine Erfassung der Zyklenzahl kann eine Gesamtzyklenzahl bestimmt werden zur Erfassung der Anzahl sämtlicher Fluid-, insbesondere Flüssigkeits-, Reinigungsschritte seit der letzten Befüllung des Fluidtanks, wodurch vorteilhaft der Verbrauch des Reinigungsfluides und insbesondere eine noch im Fluidtank vorhandene Restfluidmenge erfasst werden kann.

Alternativ oder zusätzlich kann eine Restzyklenzahl bestimmt werden, die auf Basis einer im Fluidtank vorhandenen Restfluidmenge und einer, insbesondere geschätzten oder über mehrere Verfahrensabläufe gemittelte, benötigten Reinigungsfluidmenge bestimmt wird. Auf Basis der prognostizierten Restzyklenzahl kann bestimmt werden, wie viele Verfahrensabläufe mit der vorhandenen Restfluidmenge noch durchführbar sind. Zum Bestimmen des Füllstands kann der Fluidtank einen Füllstandssensor aufweisen.

Nach der Erfindung ist es vorgesehen, dass die Druckluftmenge abhängig ist von der Zyklenzahl derart, dass eine höhere Zyklenzahl zu einer größeren Druckluftmenge führt, wobei insbesondere die Druckluftmenge bis zu einer Maximal-Druckluftmenge erhöht wird. Analog zu der Weiterbildung des Verfahrens, in der die Reinigungsfluidmenge abhängig von der Zyklenzahl ist, kann in dieser Weiterbildung der Vorteil erreicht werden, dass zunächst versucht wird, mit einer relativ geringen Druckluftmenge, nämlich einer Start-Druckluftmenge, eine Reinigung der Sensoroberfläche zu erreichen. Erst falls dies nicht erfolgreich ist, wird die Druckluftmenge bis zu der Maximal-Druckluftmenge erhöht. Bei der Erhöhung der Druckluftmenge spielt insbesondere eine Restdruckluftmenge eine untergeordnete Rolle, da Druckluft in der Regel über einen an Bord des Fahrzeugs vorhandenen Verdichter erzeugt und bei Bedarf bereitgestellt werden kann und/oder über einen Druckluftvorratsbehälter vorgehalten werden kann. Somit kann eine Druckluftmenge, insbesondere eine Start- und/oder Maximal-Druckluftmenge, frei und insbesondere ausschließlich nach Gesichtspunkten einer maximalen Reinigungsleistung gewählt werden. Insbesondere kann eine Druckluftmenge größer als eine Reinigungsfluidmenge gewählt werden.

In einer vorteilhaften Weiterbildung können beide vorherigen Weiterbildungen kombiniert werden, derart, dass in Abhängigkeit der Zyklenzahl die Reinigungsfluidmenge und die Druckluftmenge zusammen erhöht werden. Durch eine derartige gemeinsame Erhöhung der Reinigungsfluidmenge und der Druckluftmenge in Abhängigkeit der Zyklenzahl kann vorteilhaft die gesamte Reinigungsleistung pro Reinigungszyklus erhöht werden. Eine derartige Weiterbildung des Verfahrens kann vorteilhaft mit einer Kolbeneinheit umgesetzt werden, bei der die Druckluftmenge in einer Luftkammer durch die verdrängende Bewegung eines Druckstempels auch einer Reinigungsfluidmenge in einer Fluidkammer entspricht.

Insbesondere kann die Start-Druckluftmenge identisch zu der Start-Reinigungsfluidmenge und/oder die Maximal-Druckluftmenge identisch zu der Maximal-Reinigungsfluidmenge sein und/oder eine jeweilige Erhöhung der Druckluftmenge in Abhängigkeit der Zyklenzahl identisch zu der entsprechenden Erhöhung der Reinigungsfluidmenge sein.

Vorteilhaft ist vorgesehen, dass
- die Schrittfolge nach dem hybriden Reinigungsschritt weiter den Schritt aufweist: Prüfen des Hybrid-Reinigungsergebnisses in einem weiteren Prüfschritt, wobei
- die Schrittfolge wiederholt wird, bis eine Abbruchbedingung erreicht ist.

In einer derartigen Weiterbildung des Verfahrens kann vorteilhaft der Verlauf des Verfahrens durch eine Abbruchbedingung beendet werden, sodass eine endlose Wiederholung der Reinigungsschritte vermieden wird.

Die Erfindung wird dadurch weitergebildet, dass die Abbruchbedingung erreicht ist, wenn als erste Abbruchbedingung das Hybrid-Reinigungsergebnis positiv ist oder als zweite Abbruchbedingung die Zyklenzahl einen Maximalwert erreicht hat. In einer derartigen Weiterbildung wird das Verfahren bei einer erfolgreichen Reinigung der Sensoroberfläche durch die erste Abbruchbedingung beendet. Bei einer erfolglosen Reinigung wird, nachdem ein Maximalwert der Zyklenzahl erreicht wurde, das Verfahren durch eine zweite Abbruchbedingung beendet, um vorteilhaft Reinigungsfluid zu sparen. Die zweite Abbruchbedingung ist somit insbesondere sinnvoll, wenn eine Verschmutzung derart hartnäckig ist, dass sie durch das Reinigungssystem nicht entfernt werden kann. In diesem Fall kann ein Warnsignal ausgegeben werden, dass eine Reinigung des Sensors erfolglos war.

Insbesondere ist vorgesehen, dass der Prüfschritt zum Prüfen des Luft-Reinigungsergebnisses und/oder der weitere Prüfschritt zum Prüfen des Hybrid-Reinigungsergebnisses über den Sensor, insbesondere den optischen Sensor, und/oder dessen Auswerteeinrichtung, erfolgt. Indem das Prüfen des Reinigungsergebnisses über den zu reinigenden Sensor selbst erfolgt, kann vorteilhaft auf weitere Sensoren verzichtet werden.

Vorteilhaft ist vorgesehen, dass der Prüfschritt oder der weitere Prüfschritt während des Luft-Reinigungsschrittes oder des weiteren Luft-Reinigungsschrittes oder
- innerhalb einer Wartezeit nach dem Luft-Reinigungsschritt oder dem weiteren Luft-Reinigungsschritt erfolgt. In einer Weiterbildung, in der der Prüfschritt während des Reinigungsschrittes erfolgt, kann vorteilhaft eine unmittelbare Beurteilung der Reinigung erfolgen. Hierbei ist es insbesondere möglich, die Druckluftmenge in Abhängigkeit des Reinigungsergebnisses während des Beaufschlagens anzupassen. Somit kann beispielsweise bei einer leichten Verschmutzung das Beaufschlagen mit Druckluft vorzeitig eingestellt werden, wenn das Reinigungsergebnis bereits positiv ist.

Vorteilhaft ist vorgesehen, dass die Wartezeit 500 ms beträgt. Eine Wartezeit von 500 ms stellt einen geeigneten Kompromiss dar, da sich nach dieser Zeit ein wesentlicher Teil der Verschmutzungen nach der Beaufschlagung von der Sensoroberfläche gelöst und entfernt haben, aber gleichzeitig eine möglichst schnelle Beurteilung des Reinigungsergebnisses erreicht wird.

Die Erfindung wird dadurch weitergebildet, dass das Verfahren bei einem negativen Initial-Reinigungsergebnis eines Initial-Prüfschrittes ausgeführt wird. In einer derartigen Weiterbildung des Verfahrens kann in vorbestimmten Zeitintervallen und/oder nach einer vorbestimmten Laufleistung des Fahrzeugs in einem Startschritt des Verfahrens ein Initial-Prüfschritt erfolgen, um die Notwendigkeit einer Reinigung der Sensoroberfläche zu beurteilen.

Insbesondere ist vorgesehen, dass das Verfahren bei einem positiven Regensignal eines Regensensors ausgeführt wird. Eine derartige Weiterbildung kann in einem Startschritt insbesondere zusätzlich zu einer zyklischen Ausführung des Initial-Prüfschrittes erfolgen und nutzt vorteilhaft den Umstand, dass bei Vorhandensein von Regen die Sensoroberfläche mit höherer Wahrscheinlichkeit feucht ist und sich somit Verschmutzungen bereits ohne den Einsatz von Reinigungsfluid aufgeweicht und/oder gelöst haben können. Auf diese Weise kann auf Reinigungsfluid sparende Weise eine Reinigung der Sensoroberfläche erfolgen. Als Regensensor kann insbesondere ein im Fahrzeug bereits im Rahmen einer Scheibenwischanlage vorhandener Regensensor genutzt werden.

Insbesondere ist vorgesehen, dass das Verfahren in Abhängigkeit einer Umgebungsvariable ausgeführt wird. Eine Umgebungsvariable kann insbesondere die Wahrscheinlichkeit schlechten Wetters, das heißt insbesondere dem Vorhandensein von Regen, Hagel, Schnee beschreiben. Hierzu kann das Steuergerät des Reinigungssystems mit Steuermodulen oder Sensoren des Fahrzeugs verbunden sein, die einem anderen Primärzweck dienen, beispielsweise einem Thermometer, insb. Außenthermometer, einem Scheibenwischer-Steuergerät, einem Frontscheiben-Heizung-Steuergerät, einem Heckscheiben-Heizung-Steuergerät, einem Anti-Blockier-System-Steuergerät (ABS), und/oder einem Steuergerät für eine elektronische Stabilitätskontrolle (ESP). In Abhängigkeit der Umgebungsvariable kann die Häufigkeit der Durchführung des Verfahrens angepasst werden, derart, dass bei schlechtem Wetter häufiger gereinigt wird, um die Funktion des Sensors zu gewährleisten und/oder um das Vorhandensein von Feuchtigkeit zu nutzen, um eine - Reinigungsfluid sparende - Reinigung nur mit Druckluft durchzuführen.

Vorteilhaft ist vorgesehen, dass eine Restfluidmenge und/oder Restbetriebszeit des Reinigungssystems bestimmt wird, wobei die Bestimmung insbesondere auf Basis einer Restzyklenzahl oder einer Gesamtzyklenzahl erfolgt. Die Restfluidmenge im Fluidtank kann durch Messung eines Füllstandssensors direkt bestimmt werden. Alternativ kann eine näherungsweise Bestimmung der Restfluidmenge auf Basis der tatsächlich verbrauchten Reinigungsfluidmenge und eines Tankvolumens des Fluidtanks erfolgen.

Eine Bestimmung der Restzyklenzahl kann insbesondere auf Basis der Restfluidmenge und einer definierten konstanten oder geschätzten zu erwartenden, insbesondere gemittelten, Reinigungsfluidmenge pro Fluid-Reinigungsschritt erfolgen. Eine Bestimmung der Restbetriebszeit kann auf Basis der Restfluidmenge und unter Annahme eines durchschnittlichen Zeitintervalls zwischen zwei Durchführungen des Reinigungsverfahrens, sowie einer pro Durchführung zu erwartenden Reinigungsfluidmenge erfolgen, wobei die zu erwartenden Reinigungsfluidmenge pro Durchführung auf Basis der zu erwartenden Zyklenzahl pro Durchführung und einer definierten konstanten oder geschätzten zu erwartenden, insbesondere gemittelten, Reinigungsfluidmenge pro Fluid-Reinigungsschritt erfolgt.

In einer derartigen Weiterbildung des Verfahrens kann vorteilhaft die Restfluidmenge in die Routenplanung des Fahrzeugs einbezogen werden. Insbesondere kann vermieden werden, dass plötzlich kein Reinigungsfluid mehr vorhanden ist und die Funktion des Reinigungssystems ausfällt. Auf diese Weise können Stillstandzeiten und Fahrtunterbrechungen eines Fahrzeugs aufgrund eines verschmutzten Sensors vorteilhaft vermieden werden. Für den Fall, dass die Restfluidmenge und/oder die Restbetriebszeit nicht mehr ausreicht zum Erreichen eines Ortes zum Befüllen des Reinigungstanks, kann, insbesondere in einem autonomen Fahrzeug oder in einem teilautonomen Fahrzeug während autonomer Fahrfunktionen, ein Fahrer oder Bediener rechtzeitig zur Übernahme der Kontrolle des Fahrzeugs aufgefordert werden, wenn abzusehen ist, dass ein Reinigungssystem nach der Restbetriebszeit eine Reinigungsfunktion nicht mehr gewährleisten kann. Alternativ kann ein Fahrzeug, insbesondere ein autonomes Fahrzeug, in dem Fall, dass das Reinigungssystem eine Reinigungsfunktion nicht mehr gewährleisten kann, in einem sicheren Haltezustand überführt, das heißt gestoppt, werden.

Die Erfindung wird dadurch weitergebildet, dass nach dem Prüfen des Luft-Reinigungsergebnisses in dem Prüfschritt, bei einem negativen Luft-Reinigungsergebnis zusätzlich ein Zusatz-Luftreinigungsablauf erfolgt, der die Schritte aufweist:
- Beaufschlagen der Sensoroberfläche mit einer Zusatz-Druckluftmenge in einem Zusatz-Luft-Reinigungsschritt, und Prüfen des Luft-Reinigungsergebnisses in einem Zusatz-Prüfschritt. In einer derartigen Weiterbildung wird - in Anlehnung an das Konzept der Erfindung, bei der Reinigung möglichst Flüssigkeit einzusparen - zunächst versucht, mit einem oder mehreren, weiteren Zusatz-Luft-Reinigungsschritten eine Reinigung der Sensoroberfläche zu erreichen, bevor in einem hybriden Reinigungsschritt eine Reinigungsfluidmenge eingesetzt wird.

Insbesondere ist vorgesehen, dass der Zusatz-Luftreinigungsablauf wiederholt wird, bis das Luft-Reinigungsergebnis positiv ist oder eine Zusatz-Abbruchbedingung erreicht ist. In einer derartigen Weiterbildung kann der Zusatz-Luftreinigungsablauf wiederholt werden, bis das Luft-Reinigungsergebnis positiv ist, und somit die Reinigung der Sensoroberfläche erfolgreich war, oder - falls das Luft-Reinigungsergebnis über ein oder mehrere Läufe negativ ist - nach einer definierten Anzahl von Versuchen durch Erreichen einer Zusatz-Abbruchbedingung abgebrochen werden.

Insbesondere ist vorgesehen, dass die Zusatz-Abbruchbedingung erreicht ist, wenn eine Zusatz-Zyklenzahl einen Zusatz-Maximalwert erreicht hat. Durch ein Erfassen einer Zusatz-Zyklenzahl in einem Zusatz-Zählschritt kann die Anzahl der Durchführungen des Zusatz-Luftreinigungsablaufs erfasst werden und insbesondere beim Erreichen eines Zusatz-Maximalwerts der Zusatz-Luftreinigungsablauf abgebrochen werden, um zum hybriden Reinigungsschritt überzugehen. Der Zusatz-Maximalwert kann beispielsweise 1 oder 3 oder 5 oder 10 betragen.

Insbesondere ist vorgesehen, dass die Zusatz-Druckluftmenge abhängig ist von der Zusatz-Zyklenzahl derart, dass eine höhere Zusatz-Zyklenzahl zu einer größeren Zusatz-Druckluftmenge führt.

Die Erfindung wird dadurch weitergebildet, dass das Reinigungssignal und/oder das Reinigungsergebnis in Abhängigkeit eines Soll-Ist-Vergleiches gebildet wird, insbesondere in Abhängigkeit einer Helligkeitsabweichung und/oder einer Kontrastabweichung. Insbesondere umfasst der Soll-Ist-Vergleich einen Vergleich von dem Sensorsignal SI oder einem Merkmal des Sensorsignals SI als Ist-Wert mit einem Vergleichs- oder Referenz-Sensorsignal als Sollwert. Insbesondere wird ein Reinigungssignal ausgegeben, wenn eine Abweichung zwischen Soll- und Ist-Wert überschritten ist. Insbesondere wird ein negatives Reinigungsergebnis ausgegeben, wenn eine Abweichung zwischen Soll- und Ist-Wert überschritten ist.

Die Erfindung wird dadurch weitergebildet, dass das Ist-Signal durch das Sensorsignal gebildet wird, und das Soll-Signal durch ein Vergleichs-Sensorsignal, das insbesondere von mindestens einem weiteren Sensor bereitgestellt wird, und/oder durch ein Referenz-Sensorsignal, das insbesondere von einem Referenzspeicher bereitgestellt wird, gebildet wird. Durch den Vergleich mit einem Vergleichs- oder Referenz-Sensorsignal kann ein Sensorsignal besser plausibilisiert und/oder validiert werden und somit vorteilhaft ein Reinigungssignal und/oder ein Reinigungsergebnis zuverlässiger generiert werden.

Insbesondere kann zum Bestimmen eines Reinigungssignals und/oder eines Reinigungsergebnisses ein durchschnittlicher Helligkeitswert des Bildes des Kamerasignals bestimmt werden und mit einer oder mehreren, insbesondere punktuell auftauchenden, Helligkeitsabweichungen verglichen werden.

Insbesondere kann zum Bestimmen eines Reinigungssignals und/oder eines Reinigungsergebnisses ein durchschnittlicher Helligkeitswert mit einem durchschnittlichen Vergleichs-Helligkeitswert verglichen werden, wobei der durchschnittliche Vergleichs-Helligkeitswert von einem oder mehreren weiteren Sensoren, insbesondere einer oder mehrerer weiterer Kameras, bereitgestellt wird.

Insbesondere kann zum Bestimmen eines Reinigungssignals und/oder eines Reinigungsergebnisses und/oder eines Regensignals ein Kontrast oder ein Kontrast-Mittelwert in Form eines Grauwertgradienten oder eines Farbwertgradienten gebildet werden, wobei zur Bestimmung einer Kontrastabweichung der Grauwertgradient mit einem Referenz-Grauwertgradienten verglichen werden kann, oder der Farbwertgradient mit einem Referenz-Farbwertgradienten verglichen werden kann.

Im Rahmen einer bevorzugten Weiterbildung des Reinigungssystems ist eine Sensorauswerteeinrichtung vorgesehen, wobei die Sensorauswerteeinrichtung insbesondere ein Soll-Ist-Vergleichsmodul und/oder ein Helligkeits-Vergleichsmodul und/oder ein Kamerabild-Vergleichsmodul und/oder ein Kontrast-Vergleichsmodul aufweist.

Im Rahmen einer bevorzugten Weiterbildung des Reinigungssystems ist eine Kommunikationsschnittstelle vorgesehen, die ausgebildet ist zur Kommunikation mit einem Fahrzeugbus und/oder einer drahtlosen Kommunikationseinrichtung. Eine solche Kommunikationsschnittstelle ermöglicht vorteilhaft eine bidirektionale Kommunikation zur externen Steuerung des Reinigungsverfahrens, insbesondere zur externen Erzeugung eines Reinigungssignals. In Weiterbildungen kann die Kommunikationsschnittstelle auch zur Kommunikation mit einer drahtgebundenen Kommunikationseinrichtung ausgebildet sein.

Im Rahmen einer bevorzugten Weiterbildung des Reinigungssystems umfasst dieses einen Auslöseschalter. Im Rahmen einer bevorzugten Weiterbildung ist das Reinigungssystem ausgebildet, mit einem Auslöseschalter und/oder einer Kommunikationseinrichtung zu kommunizieren, insbesondere drahtgebunden oder drahtlos, insbesondere zur Übermittlung eines Reinigungssignals an das Reinigungssystem.

Im Rahmen einer besonders bevorzugten Weiterbildung des Reinigungssystems ist eine gemeinsame Düse vorgesehen zum Beaufschlagen der Sensoroberfläche mit einer Druckluftmenge und einer Reinigungsfluidmenge. Durch eine gemeinsame Düse wird vorteilhaft eine kompakte Bauweise der Reinigungsvorrichtung, insbesondere eines Applikationsmoduls, an der Sensoroberfläche erreicht. Auch wird vorteilhaft das Risiko eines Einfrierens der Düse vorteilhaft reduziert, weil die Düse nach jeder Benutzung mittels Druckluft freigeblasen werden kann, wodurch eventuell noch vorhandenes Reinigungsfluid entfernt werden kann.

Im Rahmen einer besonders bevorzugten Weiterbildung des Reinigungssystems ist eine gemeinsame Mediumsleitung vorgesehen. Mit einer gemeinsamen Mediumsleitung wird vorteilhaft eine platzsparende Bauweise erreicht. Auch wird vorteilhaft das Risiko eines Einfrierens des Reinigungsfluids in der Mediumsleitung vorteilhaft verhindert, da die Mediumsleitung nach jeder Benutzung stets freigeblasen werden kann und somit das Reinigungsfluid aus der Mediumsleitung entfernt werden kann.

Im Rahmen einer besonders bevorzugten Weiterbildung des Reinigungssystems weist das Reinigungssystem eine Kolbeneinheit mit einer Fluidkammer und einer Luftkammer auf, wobei die Fluidkammer und die Luftkammer von einem axial bewegbaren Druckstempel dichtend voneinander getrennt sind. Insbesondere weist die Kolbeneinheit eine Rückstellfeder auf, die den Druckstempel mit dem Gehäuse der Kolbeneinheit verbindet, um eine in axialer Richtung auf den Druckstempel wirkende Rückstellkraft zu erzeugen, insbesondere um den Druckstempel nach erfolgter Beaufschlagung mit Druckluft in eine Ruhestellung zu bewegen.

In einer Weiterbildung des Fahrzeugs ist das Fahrzeug ein autonomes Fahrzeug. In einer Weiterbildung des Fahrzeugs weist das Fahrzeug einen Fahrzeugbus, insbesondere einen CAN-Bus, auf und das Reinigungssystem eine Kommunikationseinrichtung auf, die signalführend mit dem Fahrzeugbus verbindbar und/oder verbunden ist.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo dies zur Erläuterung dienlich ist, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1A: ein Reinigungssystem ausgebildet zur Durchführung des Verfahrens gemäß dem ersten Aspekt der Erfindung,
- Fig. 1B, 1C: eine Sensorauswerteeinrichtung und eine Darstellung zur Demonstration der Funktionsweise,
- Fig. 2A: eine Weiterbildung eines Verfahrens gemäß dem ersten Aspekt der Erfindung,
- Fig. 2B: einen Ausschnitt einer Weiterbildung des Verfahrens mit einem Zusatz-Luftreinigungsablauf,
- Fig. 3: eine erste Weiterbildung einer Reinigungsvorrichtung für ein Reinigungssystem gemäß dem zweiten Aspekt der Erfindung,
- Fig. 4A, 4B: jeweils eine zweite Weiterbildung einer Reinigungsvorrichtung für ein Reinigungssystem gemäß dem zweiten Aspekt der Erfindung,
- Fig. 5: ein Fahrzeug mit einem Reinigungssystem gemäß dem zweiten Aspekt der Erfindung,
- Fig. 6: ein schematischer Verlauf von beispielhaften Restfluidmengen und Zyklenzahlen.

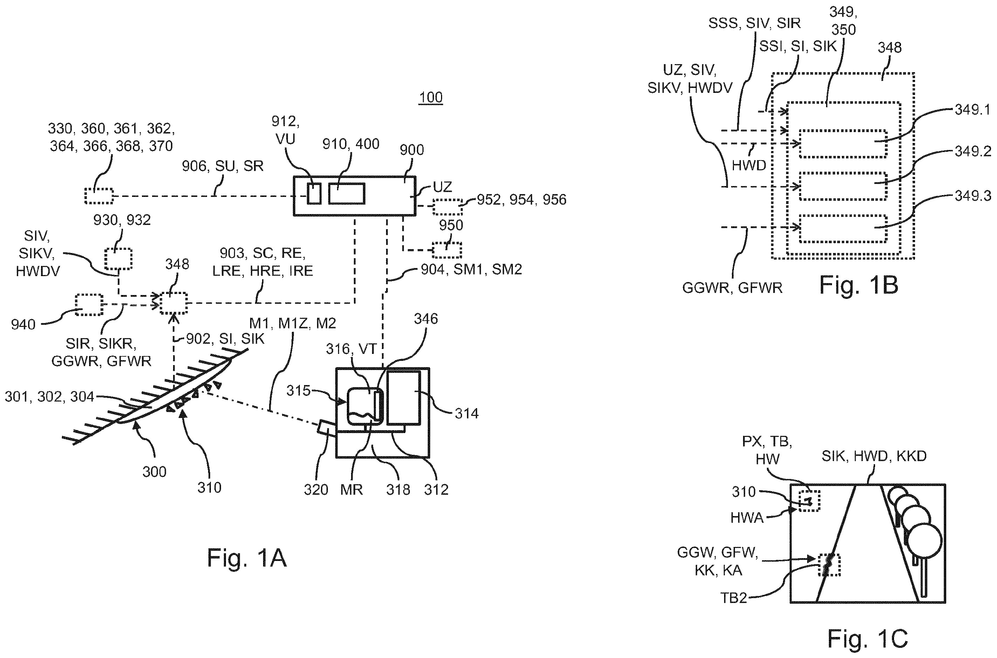

Fig. 1A zeigt ein Reinigungssystem 100 zur Reinigung einer Sensoroberfläche 300 eines als optischen Sensor 302 ausgebildeten Sensors 301 eines hier nicht näher dargestellten Fahrzeugs 1000. Der optische Sensor 302 ist vorliegend als Kamera 304 zur Umgebungserfassung ausgebildet. Das Reinigungssystem 100 weist weiterhin ein Steuergerät 900 auf, welches einen Programmspeicher 910 aufweist, in dem ein Verfahren 400 zur Ausführung gespeichert werden kann.

Mittels einer Sensorleitung 902 ist der Sensor 301 mit dem Steuergerät 900 zur Übertragung eines Sensorsignals SI signalführend verbunden. Optional kann der Sensor 301, insbesondere in der Sensorleitung 902 zwischengeschaltet, eine Sensorauswerteeinrichtung 348 oder dergleichen Signalverarbeitungseinheit aufweisen, in der das Sensorsignal SI verarbeitet wird. In diesem Fall ist der Sensor 301 über die Sensorleitung 902 mit der Sensorauswerteeinrichtung 348 verbunden, und die Sensorauswerteeinrichtung 348 über eine Auswerteleitung 903 mit dem Steuergerät 900. In einer Sensorauswerteeinrichtung 348 oder dergleichen Auswerteeinrichtung des Sensors 301 und/oder des Fahrzeugs 1000 kann insbesondere das Sensorsignal SI dahingehend ausgewertet werden, ob eine Reinigung erforderlich ist. In Abhängigkeit dieser Prüfung, insbesondere in Abhängigkeit einer Verschmutzung des Sensors und einer damit einhergehenden Verschlechterung der Signalqualität des Sensorsignals SI, kann insbesondere ein Reinigungssignal SC ausgegeben werden. In analoger Weise kann durch die Sensorauswerteeinrichtung 348 ein Reinigungsergebnis RE, insbesondere ein Initial-Reinigungsergebnis, Luft-Reinigungsergebnis LRE oder ein Hybrid-Reinigungsergebnis, bereitgestellt werden. Das Reinigungssignal SC kann insbesondere binärer und/oder boolescher Natur sein und den Wert "1" oder "TRUE" annehmen, wenn eine Reinigung erforderlich ist und entsprechend den Wert "0" oder "FALSE", wenn keine Reinigung erforderlich ist. Alternativ oder zusätzlich kann das Reinigungssignal SC als Spannung vorliegen, wobei eine Spannung von bspw. 5 Volt anliegt, wenn eine Reinigung erforderlich ist und keine Spannung, das heißt eine Spannung von 0 Volt anliegen, wenn keine Reinigung erforderlich ist. Das Signal zur Reinigung kann ebenfalls, über den Fahrzeug-CAN-Bus oder einen untergeordneten Fahrzeugbus übermittelt werden.

Über die Sensorleitung 902 kann ein Luft-Reinigungsergebnis LRE, ein Hybrid-Reinigungsergebnis HRE und/oder ein Initial-Reinigungsergebnis IRE an das Steuergerät 900 übertragen werden.

Das Reinigungssignal SC kann durch eine Vielzahl von Methoden oder Kombination der verschiedenen Methoden durch die Sensorauswerteinrichtung 348, insbesondere durch unterschiedliche Module 349, 349.1, 349.2, 349.3 der Sensorauswerteinrichtung 348, generiert werden. Dem Fachmann ist an dieser Stelle klar, dass es zur Bestimmung der Signalqualität und zur Bestimmung eines Reinigungssignals SC für jede Sensorart bevorzugte Methoden geben kann. Im Allgemeinen gilt, dass andere Sensorsysteme wie Radar-, Lidar-, Infrarot- oder Ultraschallsensoren, die als Sensor 301 eingesetzt werden können, weniger anfällig sind gegen leichte Verschmutzungen als Kameras. Trotzdem müssen diese unter Umständen von Verunreinigungen ihrer Oberflächen befreit werden. Für die Generierung des Reinigungssignals SC kann hierbei in der Sensorauswerteinrichtung 348 vorzugsweise ein Soll-Ist-Vergleich 350, insbesondere in einem Soll-Ist-Vergleichsmodul 349, vorgenommen werden. In einem Soll-Ist-Vergleichsmodul 349 kann ein Sensorsignal SI, insbesondere ein Kamerasignal SIK, als Ist-Signal SSI mit einem Referenz-Sensorsignal SIR als Soll-Signal SSS verglichen werden. Ein Referenz-Sensorsignal SIR kann in einem Referenzspeicher 940 gespeichert und bereitgestellt werden. Alternativ oder zusätzlich kann durch das Soll-Ist-Vergleichsmodul 349 ein Vergleichen eines Sensorsignals SI, insbesondere eines Kamerasignals SIK, mit einem Vergleichs-Sensorsignal SIV als Soll-Signal SSS, insbesondere mit einem Vergleichs-Kamerasignal SIKV, durchgeführt werden, um beispielsweise auf eine Verunreinigung 310 der Sensoroberfläche 300 zu schließen und dabei insbesondere durch den Vergleich mit einem momentanen Vergleichssignal andere Einflüsse wie z.B. Dunkelheit auszuschließen. Das Vergleichs-Sensorsignal SIV kann dabei von einem weiteren Sensor 930, insbesondere des gleichen Fahrzeugs 1000, bereitgestellt werden. Wird in dem Soll-Ist-Vergleichsmodul 349 festgestellt, dass das Sensorsignal SI oder ein Merkmal des Sensorsignals SI einen Grenzwert, insbesondere ein Referenz-Sensorsignal SIR und/oder ein Vergleichs-Sensorsignal SIV, überschreitet - oder um einen bestimmten tolerierbaren Betrag überschreitet - wird ein Reinigungssignal SC von der Sensorauswerteinrichtung 348 ausgegeben. Ein solcher Vergleich kann auf die gesamte verschmutzte Sensoroberfläche 300 bezogen sein und/oder auf einen Teilbereich TB der verschmutzten Sensoroberfläche 300. Ein Vergleich mit einem Grenzwert kann sich aber auch auf ein Rauschen oder eine Streuung des Sensorsignals SI, insbesondere des Kamerasignals SIK beziehen, welches sich durch eine Verunreinigung 310 der Sensoroberfläche 300 einstellt.

Die Verschlechterung der Signalqualität kann in der Sensorauswerteinrichtung 348 durch verschiedene Methoden erkannt werden, die in Modulen 349.1, 349.2, 349.3 der Sensorauswerteinrichtung 348 implementiert sein können, siehe Fig. 1B. Die Module 349.1, 349.2, 349.3 stellen dabei insbesondere Weiterbildungen des Soll-Ist-Vergleichsmoduls 349 dar. Die Sensorauswerteinrichtung 348 kann ein Helligkeits-Vergleichsmodul 349.1 aufweisen. Soll bspw. ein Reinigungssignal SC und/oder ein Reinigungsergebnis RE in Abhängigkeit eines als Kamerasignal SIK ausgebildeten Sensorsignals SI bestimmt werden, kann in einem Helligkeits-Vergleichsmodul 349.1 ein durchschnittlicher Helligkeitswert HWD des Bildes des Kamerasignals SIK bestimmt werden und mit, insbesondere punktuell auftauchenden, Helligkeitsabweichungen HWA verglichen werden, siehe Fig. 1C. Der durchschnittliche Helligkeitswert HWD wird dabei insbesondere gebildet, indem ein Mittelwert einzelner Helligkeitswerte HW einer Anzahl, insbesondere der Gesamtheit, von Teilbereichen TB oder Pixeln PX des Bildes des Kamerasignals SIK gebildet wird. Eine Verschmutzung 310 auf der Sensoroberfläche 300, insbesondere ein Fleck auf der Kameralinse einer Kamera 304 verursacht durch Dreck, erzeugt insbesondere punktuell in einem Teilbereich TB oder einem Pixel PX einen geringeren Helligkeitswert HW, als es im Rest des Bildes des Kamerasignals SIK der Fall ist, insbesondere geringer als der durchschnittliche Helligkeitswert HWD, sodass auf eine Verschmutzung 310 geschlossen werden kann und entsprechend ein Reinigungssignal SC ausgegeben werden kann.

Die Sensorauswerteinrichtung 348 kann ein Kamerabild-Vergleichsmodul 349.2 aufweisen. Insbesondere, wenn die gesamte Sensoroberfläche 300 der Kamera 304 oder ein überwiegender Teil davon von einer Verschmutzung 310 bedeckt ist, weist das gesamte Bild einen unerwarteten Helligkeitswert, insbesondere einen unerwartet niedrigen durchschnittlichen Helligkeitswert HWD auf. Um die Helligkeit, insbesondere einen unerwartet niedrigen durchschnittlichen Helligkeitswert HWD, zu validieren, können durch das Kamerabild-Vergleichsmodul 349.2 Bilder von einem oder mehreren weiteren Sensoren 930, insbesondere weiteren Kameras 932, und/oder die Uhrzeit UZ berücksichtigt werden. Die Uhrzeit UZ kann insbesondere vom Steuergerät 900 bereitgestellt werden. Die mindestens eine weitere Kamera 932 kann ein Vergleichs-Kamerabild SIKV mit einem durchschnittlichen Vergleichs-Helligkeitswert HWDV bereitstellen. Alternativ oder zusätzlich kann der durchschnittliche Vergleichs-Helligkeitswert HWDV von einem anderen geeigneten weiteren Sensor 930 bereitgestellt werden. Durch den Vergleich mit dem Vergleichs-Helligkeitswert HWDV wird es so möglich zu bestimmen, ob eine Verschmutzung 310 vorliegt, oder ob es nur dunkel ist in der Umgebung. Gleiches gilt für den Einflussfaktor der Uhrzeit UZ, welche zur Berücksichtigung der tageszeitabhängigen Lichtverhältnisse herangezogen werden kann und insbesondere den Unterschied zwischen Tag und Nacht repräsentieren soll.

Die Sensorauswerteinrichtung 348 kann weiter ein Kontrast-Vergleichsmodul 349.3 aufweisen. Über den Vergleich eines Kontrastes KK, insbesondere eines Teilbereiches TB des Kamerasignals SIK und/oder über einen - über das gesamte Bild des Kamerasignals SIK gebildeten - Kontrast-Mittelwert KKD eine Bildauswertung in dem Kontrast-Vergleichsmodul 349.3 durchgeführt werden. Ein Kontrast KK und/oder ein Kontrast-Mittelwert KKD kann insbesondere über einen Grauwertgradienten GGW oder einen Farbwertgradienten GFW bestimmt werden. Ein verschwommenes Bild, und somit insbesondere ein auftretender Regen, kann ermittelt werden, indem erkannt wird, dass ein unklares Kantenbild vorhanden ist - wie in Fig. 1C beispielhaft für einen weiteren Teilbereich TB2 gezeigt. Das heißt insbesondere, dass der Grauwertgradient GGW oder der Farbwertgradient GFW nicht mehr plausibel ist und/oder nicht mehr plausibel bestimmt werden kann. Der Grauwertgradient GGW und/oder der Farbwertgradient GFW kann für einen Teilbereich TB2 oder für das gesamte Bild des Kamerasignals SIK bestimmt werden. Der Grauwertgradient GGW kann mit einem Referenz-Grauwertgradienten GGWR verglichen werden, um zu bestimmen, ob eine Kontrastabweichung KA vorliegt. Der Farbwertgradient GFW kann mit einem Referenz-Farbwertgradienten GFWR verglichen werden, um zu bestimmen, ob eine Kontrastabweichung KA vorliegt. Auf Basis einer Kontrastabweichung KA kann ein Regensignal SR und/oder ein Reinigungssignal SC durch das Kontrast-Vergleichsmodul 349.3 bereitgestellt werden. Insbesondere kann das Kontrast-Vergleichsmodul 349.3 das Regensignal SR alternativ oder zusätzlich zu einem Regensensor 330 bereitstellen. Weiterhin kann das Kontrast-Vergleichsmodul 349.3 eine verschmutze Sensoroberfläche 300, insbesondere eine feucht verschmutzte Oberfläche 300, über einen abweichenden Grauwertgradienten GGW oder Farbwertgradienten GFW auf Basis der Kontrastabweichung KA bestimmen.

Alternativ oder zusätzlich kann das Reinigungssignal SC auch manuell generiert werden.

Erkennt der Fahrer, bspw. auf einem Display, dass das Kamerasignal SIK und/oder das Sensorsignal SI gestört ist, kann er das Reinigungssignal SC auch manuell erzeugen, insbesondere indem er einen Auslöseschalter 950 und/oder sonstige Betätigungseinrichtung zum Generieren des Reinigungssignals SC betätigt, um eine Ausführung des Verfahrens 400 zu erreichen. Der Auslöseschalter 950 kann als physischer Schalter oder Knopf ausgebildet sein oder als programmtechnische Umsetzung eines Bedienfelds in einer grafischen Benutzerschnittstelle, beispielsweise in einem berührungsempfindlichen Display. Hierdurch wird es möglich, auf Situationen zu reagieren, in denen die Sensorauswerteinrichtung 348 keine validen Werte liefern kann und/oder ausgefallen ist oder dem Fahrer ein Reinigungsergebnis RE nicht ausreicht. An dieser Stelle sei zu erwähnen, dass es unabhängig davon ist, wo sich das Display befindet, ob im Fahrzeug oder außerhalb.

Das Reinigungssystem 100 kann eine Kommunikationsschnittstelle 952 aufweisen, die ausgebildet ist zur Kommunikation mit einem Fahrzeugbus 954 und/oder einer drahtlosen Kommunikationseinrichtung 956. Beispielsweise kann über eine derartige Kommunikationsschnittstelle 952 ein Reinigungssystem als Nachrüstlösung in ein Fahrzeug mit einem derartigen Fahrzeugbus 954, insbesondere einem CAN-Bus, nachgerüstet werden. Die Kommunikationsschnittstelle 952 kann ausgebildet sein zur drahtgebundenen und/oder drahtlosen Kommunikation.

Insbesondere kann die Kommunikationsschnittstelle 952 ausgebildet sein zur drahtlosen Kommunikation mit einer drahtlosen Kommunikationseinrichtung 956. Eine drahtlose Kommunikationseinrichtung 956 kann insbesondere durch einen Computer, Handheld, Smartphone oder dergleichen mobiles Endgerät sein. Die Verbindung zwischen der Kommunikationsschnittstelle 952 und der drahtlosen Kommunikationseinrichtung 956 kann über ein geeignetes Funkprotokoll, beispielsweise WLAN, Bluetooth, GSM, UMTS oder dergleichen erfolgen. Die Kommunikation zwischen der Kommunikationsschnittstelle 952 und der drahtlosen Kommunikationseinrichtung 956 kann unmittelbar erfolgen, oder mittelbar über Server, Funkmasten und/oder dergleichen Infrastrukturkomponenten.

Alternativ oder zusätzlich kann das Reinigungssignal SC auch von einem Bediener erzeugt werden, der sich nicht im Fahrzeug befindet und das Kamerabild und/oder weiteres Sensorergebnis über ein externes Display verfolgt. Dies ist vor allem bei ferngesteuerten Fahrzeugen der Fall. Hier wird durch den Fahrer/Operator über eine drahtlose Kommunikationseinrichtung 956, die beispielsweise ein mobiles Endgerät oder ein Computer sein kann, das Reinigungssignal SC erzeugt. Dies ist insbesondere vorteilhaft, wenn ein Fahrer/Operator mehrere Fahrzeuge überwachen muss, die autonom operieren. Insbesondere kann das Reinigungssignal SC auch über eine drahtlose Übertragungseinrichtung an das Fahrzeug gesendet werden. Das Fahrzeug nimmt mittels der Kommunikationsschnittstelle 952, das Reinigungssignal SC, welche von einer drahtlose Kommunikationseinrichtung 956gesendet wurde auf, und übermittelt diese an das Reinigungssystem 100. Die Übertragung kann alternativ oder zusätzlich über einen Fahrzeugbus 954 und/oder eine andere Datenverbindung innerhalb des Fahrzeuges 1000 erfolgen. Das Reinigungssignal SC kann auch direkt an das Reinigungssystem 100 drahtlos übermittelt werden.

Analog zu den hier beschriebenen Möglichkeiten zum Erzeugen des Reinigungssignals kann ebenso ein Reinigungsergebnis bestimmt werden.

Das Reinigungssystem 100 weist weiterhin eine Reinigungsvorrichtung 318 auf, welche über eine Steuerleitung 904 signalführend mit dem Steuergerät 900 verbunden ist. Die Reinigungsvorrichtung 318 weist eine Düse 320 auf, die ausgebildet und angeordnet ist, sowohl eine Druckluftmenge M1, als auch eine Reinigungsfluidmenge M2 auf die Sensoroberfläche 300 zu leiten. Das Reinigungssystem 100 weist eine Druckluftquelle 314 auf, oder ist mit einer derartigen Druckluftquelle 314 pneumatisch verbunden, um eine Druckluftmenge M1 bereitzustellen. Insbesondere kann die Druckluftquelle 314 als Druckluftspeicher oder als Kompressor ausgebildet sein. Weiterhin weist die Reinigungsvorrichtung 318 eine Reinigungsfluidquelle 315 auf zur Bereitstellung der Reinigungsfluidmenge M2. Die Reinigungsfluidquelle 315 kann einen Fluidtank 316 aufweisen, wobei die Reinigungsfluidmenge M2 über die Druckluftquelle 314, insbesondere mittels einer Kolbeneinheit, unter Druck durch die Düse 320 geleitet werden kann. In Weiterbildungen kann die Reinigungsfluidquelle 315 auch eine Pumpe aufweisen zur Förderung der Reinigungsfluidmenge M2 durch die Düse 320. Die Reinigungsfluidquelle 316 oder der Fluidtank 316 kann einen Füllstandssensor 346 aufweisen zum Bestimmen einer Restfluidmenge MR und/oder einer Restzyklenzahl ZR.

Mittels der Steuerleitung 904 kann das Steuergerät 901 ein Druckluftstellsignal SM1 an die Reinigungsvorrichtung 318 übermitteln, um die Sensoroberfläche 300 mit einer Druckluftmenge M1 zu beaufschlagen. Mittels der Steuerleitung 904 kann das Steuergerät 901 ein Reinigungsfluidstellsignal SM2 an die Reinigungsvorrichtung 318 übermitteln, um die Sensoroberfläche 300 mit einer Reinigungsfluidmenge M2 zu beaufschlagen. Mittels des Verfahrens kann die Sensoroberfläche 300 gereinigt, das heißt von Schmutz 310 befreit werden.

Die Reinigungsvorrichtung 318 kann elektromagnetische Stellmittel, insbesondere elektromagnetische Ventile, aufweisen zum selektiven Steuern der Druckluftmenge M1 und/oder der Reinigungsfluidmenge M2.

Das Steuergerät 900 kann in optionalen Weiterbildungen eine Umgebungsbestimmungseinheit 912 aufweisen, die über eine Systemleitung 906 signalführend mit mindestens einem der folgenden Systeme zur Bestimmung einer Umgebungsvariable VU auf Basis mindestens eines Umgebungssignals SU verbunden sein kann: Regensensor 330, Thermometer 360, insb. Außenthermometer 361, einem Scheibenwischer-Steuergerät 362, einem Frontscheiben-Heizung-Steuergerät 364, einem Heckscheiben-Heizung-Steuergerät 366, einem Anti-Blockier-System (ABS)-Steuergerät 368, und/oder einem Steuergerät für eine elektronische Stabilitätskontrolle (ESP) 370.

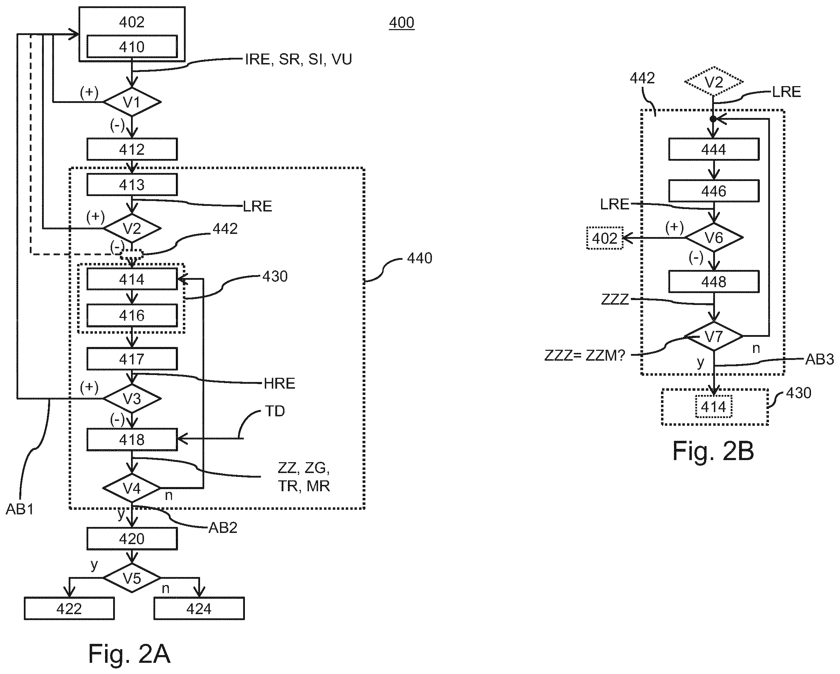

Fig. 2A zeigt eine Weiterbildung eines Verfahrens 400 gemäß dem Konzept der Erfindung.

Zu einem Startschritt 402 wird zunächst geprüft, ob mit der Durchführung des Verfahrens 400 begonnen werden soll. Hierzu kann der Startschritt 402 insbesondere einen Initial-Prüfschritt 410 aufweisen, in welchem von dem hier nicht dargestellten Sensor 301 ein Initial-Reinigungsergebnis IRE abgefragt wird.

Alternativ oder zusätzlich kann das Verfahren 400 in Abhängigkeit eines Regensignals SR und/oder andere Umgebungssignale SI ausgeführt werden, das heißt, dass im Falle eines positiven Regensignals SR das Vorhandensein der Regenfeuchtigkeit vorteilhaft für die Reinigung der Sensoroberfläche 300 genutzt werden kann, insbesondere ohne Reinigungsfluid zu verbrauchen. Alternativ oder zusätzlich kann auf Basis eines oder mehrerer Umgebungssignale SI eine Umgebungsvariable VU ermittelt werden, in deren Abhängigkeit das Verfahren 400 ausgeführt wird oder nicht.

In einer ersten Verzweigung V1 wird überprüft, ob das Initial-Reinigungsergebnis IRE negativ ist. Ein Reinigungsergebnis RE, und insbesondere ein Initial-Reinigungsergebnis IRE, ist dann negativ, wenn ein bestimmter Grad an Verschmutzung überschritten wurde, was beispielsweise über den mit steigender Verschmutzung abnehmenden Licht-Transmissionsgrad bestimmbar ist. Insbesondere kann dies mit Unterschreiten eines bestimmten Helligkeitswertes des Sensors 301 detektiert werden. Bei einer Kamera als optischer Sensor kann das Reinigungsergebnis RE mittels eines Abgleichs mit einem Referenzbild bestimmt werden, wobei bei zunehmendem Verschmutzungsgrad die Unterschiede zu dem Referenzbild zunehmen.

Bei einem negativen Initial-Reinigungsergebnis IRE wird ein Luft-Reinigungsschritt 412 durchgeführt, in dem ein Beaufschlagen der Sensoroberfläche 300 mit einer Druckluftmenge M1 erfolgt. Gleichzeitig oder im Anschluss daran erfolgt in einem Prüfschritt 413 eine Überprüfung des Luft-Reinigungsschrittes 412, in dem vom Sensor 301 ein Luft-Reinigungsergebnis LRE abgefragt wird. In Weiterbildungen des Verfahrens kann das Prüfen eines Reinigungsschrittes, insbesondere des Luft-Reinigungsschrittes 412, durch ein Empfangen eines Reinigungssignals SC erfolgen, welches die Erforderlichkeit einer Reinigung, und somit insbesondere den Erfolg eines vorangegangenen Reinigungsschrittes, anzeigt. Die Bestimmung des Luft-Reinigungsergebnisses LRE erfolgt analog zu dem oben beschriebenen Reinigungsergebnis RE. In einer zweiten Verzweigung V2 wird überprüft, ob das Luft-Reinigungsergebnis LRE negativ ist.

Für den Fall, dass das Luft-Reinigungsergebnis LRE positiv ist, war der Luftreinigungsschritt 412 erfolgreich, und das Verfahren wird zurück zum Startschritt 402 geführt. Nach der Rückführung zum Startschritt 402 erfolgt, optional nach einem definierten Zeitintervall und/oder in Abhängigkeit des Regensignals SR und/oder weiteren Startbedingungen, eine erneute Ausführung des Verfahrens 400.

Für den Fall, dass das Luft-Reinigungsergebnis LRE negativ ist, wird ein hybrider Reinigungsschritt 430 ausgeführt, welcher wiederum einen Fluid-, insbesondere Flüssigkeits-, Reinigungsschritt 414 und einen weiteren Luft-Reinigungsschritt 416 umfasst.

In dem Fluid-, insbesondere Flüssigkeits-, Reinigungsschritt 414 erfolgt zunächst eine Beaufschlagung der Sensoroberfläche 300 mit einer Reinigungsfluidmenge M2, wobei im unmittelbaren Anschluss oder nach einer einstellbaren Wartezeit in einem weiteren Luft-Reinigungsschritt 416 eine Beaufschlagung mit einer Druckluftmenge M1 erfolgt. Die Druckluftmenge M1 kann dabei der Druckluftmenge M1 aus dem Luft-Reinigungsschritt 413 entsprechen, oder auch von ihr abweichen, das heißt mehr oder weniger sein.

Im Anschluss an den hybriden Reinigungsschritt 430 erfolgt ein weiterer Prüfschritt 417, um die Wirksamkeit des hybriden Reinigungsschritts 430 zu überprüfen. Bei dem weiteren Prüfschritt 417 wird, analog zu dem oben beschriebenen Reinigungsergebnis RE, ein Hybrid-Reinigungsergebnis HRE vom Sensor 301 abgefragt.

In einer dritten Verzweigung V3 wird überprüft, ob das Hybrid-Reinigungsergebnis HRE positiv oder negativ ist. Für den Fall, dass das Hybrid-Reinigungsergebnis HRE positiv ist, ist eine erste Abbruchbedingung AB1 erfüllt und das Verfahren wird, wie auch im Fall der zweiten Verzweigung V2, zum Startschritt 402 zurückgeführt.

Für den Fall, dass das Hybrid-Reinigungsergebnis HRE negativ ist, wird in einem Zählschritt 418 eine Zyklenzahl ZZ heraufgesetzt, das heißt um 1 erhöht. Ein Zyklus beschreibt insbesondere eine Durchführung der Schritte Fluid-, insbesondere Flüssigkeits-, Reinigungsschritt 414, weiterer Luft-Reinigungsschritt 416 und weiterer Prüfschritt 417.

Übergreifend, das heißt über mehrere Durchführungen des Verfahrens, kann eine Gesamtzyklenzahl ZG bestimmt werden, welche die Gesamtzahl der Fluid, insbesondere Flüssigkeits-, Reinigungszyklen, insbesondere seit der letzten Befüllung des Fluidtanks, erfasst.

Insbesondere wird die Gesamtzyklenzahl ZG auch bei einem Fluid-Reinigungszyklus mit positiven Reinigungsergebnis erhöht, sodass alle Fluid-Reinigungszyklen, vorteilhaft zur genauen Berechnung einer Restfluidmenge, erfasst werden. In anderen Weiterbildungen kann eine Gesamtzyklenzahl ZG auch in anderer Weise gebildet werden, beispielsweise derart, dass eine Gesamtzyklenzahl ZG bei jeder Durchführung des Verfahrens erhöht wird, beispielsweise nach dem Luft-Reinigungsschritt 412.

Optional kann zusätzlich auf Basis der Zyklenzahl ZZ und der jeweils verwendeten Reinigungsfluidmenge M2 eine Restfluidmenge MR bestimmt werden, die noch im Fluidtank 316 verfügbar ist. In Weiterbildungen, in denen ein Füllstandssensor 346 im Fluidtank 316 vorhanden ist, kann die Restfluidmenge MR alternativ oder zusätzlich auch sensorisch bestimmt werden.

Auf Basis der Restfluidmenge MR kann eine Restbetriebszeit TR prognostiziert werden. Eine Restbetriebszeit TR gibt unter Annahme eines durchschnittlichen Zeitintervalls TD zwischen zwei Durchführungen des Reinigungsverfahrens an, wie lange ein Betrieb des Reinigungssystems 100 mit der vorhandenen Restfluidmenge MR noch möglich ist. Das durchschnittliche Zeitintervall TD kann insbesondere auf Basis einer momentanen Umgebungsvariable VU bestimmt werden, oder als Mittelwert einer Gesamtheit von zeitlich zurückliegenden Umgebungsvariablen, beispielsweise während der letzten 100 km bestimmten Umgebungsvariablen, um einen zeitlich gemittelten Durchschnittswert als durchschnittliche Zeitintervall TD zu erhalten. Auf Basis der Restbetriebszeit TR kann somit, insbesondere bei einem autonomen Fahrzeug 1001, ein entsprechender Fahrzeughalt zum Nachfüllen des Fluidtanks 316 bei einer Routenplanung berücksichtigt werden und/oder - insbesondere bei einem konventionellen, nicht autonomen oder teilautonomen Fahrzeug - aufgrund der nicht mehr zur gewährleistenden Reinigung ein entsprechender Hinweis für den Fahrer generiert werden, der insbesondere zur Übernahme der Kontrolle über das Fahrzeug auffordert.

In einer anschließenden vierten Verzweigung V4 wird überprüft, ob die Zyklenzahl ZZ einen Maximalwert ZM überschritten hat. Ist dies nicht der Fall, erfolgt eine Rückführung zum hybriden Reinigungsschritt 430, das heißt, dass der Fluid-, insbesondere Flüssigkeits-, Reinigungsschritt 414 und der weitere Luft-Reinigungsschritt 416 erneut durchgeführt werden. Dabei wird insbesondere die Reinigungsfluidmenge M2 in Abhängigkeit der Zyklenzahl ZZ erhöht.

Dies bedeutet, dass je öfter der Hybrid-Reinigungsschritt 430 durchgeführt wurde, desto größer die Reinigungsfluidmenge M2 ist. Dieser Zusammenhang beruht auf dem Gedanken, dass bei einem negativen Hybrid-Reinigungsergebnis HRE in dem jeweils darauffolgenden Hybrid-Reinigungsschritt 430 die Reinigungsfluidmenge M2 zur Verstärkung der Reinigungswirkung sukzessive bis zu einer Maximal-Reinigungsfluidmenge M2M erhöht werden kann, bis ein positives Hybrid-Reinigungsergebnis HRE erreicht wird und in der dritten Verzweigung V3 eine Rückführung zum Startschritt 402 erfolgt.

Für den Fall, dass trotz wiederholter Durchführung des Hybrid-Reinigungsschritts 430 kein positives Hybrid-Reinigungsergebnis HRE erreicht wird, wird bei Erreichen des Maximalwerts ZM der Zyklenzahl ZZ in der vierten Verzweigung V4 eine zweite Abbruchbedingung AB2 erreicht, woraufhin in einem Fehlerschritt 420 eine Fehlermeldung ausgegeben wird. Die Fehlermeldung kann insbesondere von dem Steuergerät 900 an eine Fahrzeug-Steuereinheit 1010 des Fahrzeugs 1000 (hier nicht gezeigt) übermittelt und von dort einem Fahrer oder einem für ein autonomes Fahrzeug 1001 zuständigen Bediener übermittelt werden. Im Anschluss an den Fehlerschritt 420 erfolgt in einer fünften Verzweigung V5 eine Überprüfung, ob es sich bei dem Sensor 301 um einen sicherheitsrelevanten Sensor handelt. Ist dies der Fall, wird in einem Notlauf-Schritt 422 ein Notlaufbetrieb des Fahrzeugs 1000 eingeleitet oder ein Signal für das Einleiten eines derartigen Notlaufbetriebs, insbesondere an die Fahrzeug-Steuereinheit 1010, übermittelt, um das Risiko einer Gefährdung für das Fahrzeug 1000 und/oder die Umgebung des Fahrzeugs 1000 aufgrund der beeinträchtigten Funktionsweise des Sensors 301 zu minimieren. In einem Notlaufbetrieb kann insbesondere die Geschwindigkeit reduziert werden oder ein manuelles Eingreifen eines Bedieners oder weiterer Sicherheitsmaßnahmen erforderlich werden. Für den Fall, dass es sich bei dem Sensor 301 nicht um einen sicherheitsrelevanten Sensor handelt, wird in einem Abbruchschritt 424 das Verfahren 400 abgebrochen. In diesem Falle wird insbesondere eine Meldung generiert, um eine weitergehende Reinigung, insbesondere eine manuelle Reinigung, der Sensoroberfläche 300 anzufordern.

Fig. 2B zeigt - mit Bezug auf Fig. 2A - einen Ausschnitt einer optionalen Weiterbildung des Verfahrens mit einem Zusatz-Luftreinigungsablauf 442, der in der Schrittfolge 440 nach dem Prüfen des Luft-Reinigungsergebnisses LRE in dem Prüfschritt 413 durchgeführt werden kann, und zwar bei einem negativen Luft-Reinigungsergebnis LRE. Nachdem das negative Luft-Reinigungsergebnis LRE in der zweiten Verzweigung V2 festgestellt wurde, erfolgt in einem Zusatz-Luft-Reinigungsschritt 444 ein erneutes Beaufschlagen der Sensoroberfläche (300) mit einer Zusatz-Druckluftmenge M1Z. Die Zusatz-Druckluftmenge M1Z kann dabei der Druckluftmange M1 entsprechen. Die Zusatz-Druckluftmenge M1Z kann auch in Abhängigkeit einer Zusatz-Zyklenzahl ZZZ gebildet werden, analog zu einer Bildung der Druckluftmenge M1 in Abhängigkeit der Zyklenzahl ZZ.

In Anschluss an den Zusatz-Luft-Reinigungsschritt 444 erfolgt in einem Zusatz-Prüfschritt 446 ein erneutes Prüfen des Luft-Reinigungsergebnisses LRE. In einer sechsten Verzweigung V6 wird geprüft, ob das Luft-Reinigungsergebnis LRE positiv oder negativ ist. Im Falle eines positiven Luft-Reinigungsergebnisses LRE erfolgt eine Rückführung zum Startschritt 402, da in diesem Fall die Reinigung der Sensoroberfläche nur mittels Luft- bzw. Zusatz-Luft-Reinigungsschritten erfolgreich war. Im Falle eines negativen Luft-Reinigungsergebnisses LRE erfolgt in einem Zusatz-Zählschritt 448 ein Heraufsetzen einer Zusatz-Zyklenzahl ZZZ, mittels welcher die Anzahl der Durchführungen des Zusatz-Luftreinigungsablaufs 442 innerhalb einer Durchführung der Schrittfolge 440 erfasst wird. In einer siebten Verzweigung V7 wird geprüft, ob die Zusatz-Zyklenzahl ZZZ einen Zusatz-Maximalwert ZZM erreicht hat. Falls dies noch nicht der Fall ist, erfolgt eine Rückführung zum Zusatz-Luft-Reinigungsschritt 444 für eine erneute Durchführung des Zusatz-Luftreinigungsablaufs 442. Falls die Zusatz-Zyklenzahl ZZZ den Zusatz-Maximalwert ZZM erreicht hat, ist eine Zusatz-Abbruchbedingung AB3 erreicht, und es wird der hybride Reinigungsschritt 430, und insbesondere der Fluid-, insbesondere Flüssigkeits-, Reinigungsschritt 414, ausgeführt. Folglich wird das Verfahren 400, insbesondere wie in Fig. 2A gezeigt, weitergeführt.

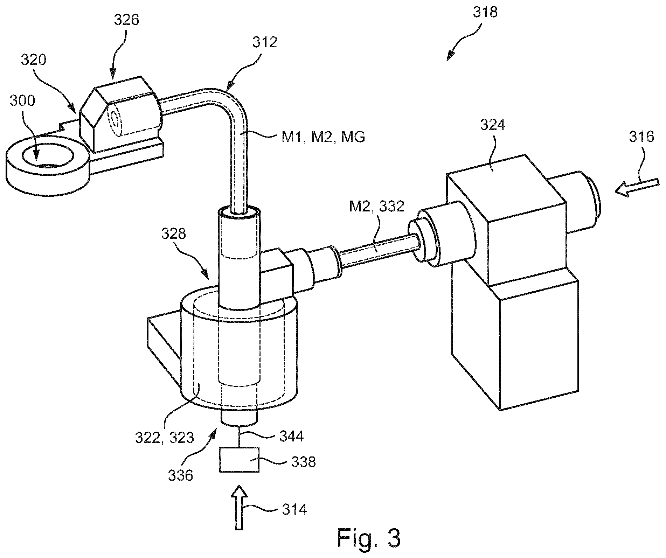

Fig. 3 zeigt eine Reinigungsvorrichtung 318 für ein Reinigungssystem 100 gemäß dem Konzept der Erfindung. Zur Reinigung einer Sensoroberfläche 300 eines hier nicht dargestellten Sensors 301 ist eine Düse 320 in einem Applikationsmodul 326 angeordnet. Die Düse 320 ist über eine gemeinsame Mediumsleitung 312 mit einer Kombinationseinheit 328 fluidführend verbunden. Das Reinigungsfluid M2 wird über eine Fluidleitung 332 in die Kombinationseinheit 328, steuerbar über ein Fluidventil 324, zugeführt. Die Kombinationseinheit 328 weist eine Kolbeneinheit 322 auf. Wenn eine Reinigungsfluidmenge M2 der Kombinationseinheit 328 zugeführt wird, sammelt sich diese in der Kolbeneinheit 322. Durch Beaufschlagen eines Druckanschlusses 336 der Kolbeneinheit 322 kann die in der Kolbeneinheit 322 befindliche Reinigungsfluidmenge M2 unter Druck über die gemeinsame Mediumsleitung 312 und die Düse 320 auf die Sensoroberfläche 300 geleitet werden. Hierzu ist der Druckanschluss 336 über eine Kolbeneinheits-Leitung 344 mit einer hier nicht dargestellten Druckluftquelle 314 verbunden. Über ein in der Kolbeneinheits-Leitung 344 angeordnetes Druckluftventil 338, welches insbesondere als elektromagnetisches Ventil ausgebildet ist, kann ein selektives Beaufschlagen des Druckanschlusses 336 erfolgen. Das Druckluftventil 338 ist insbesondere über ein hier nicht dargestelltes Steuergerät 900 steuerbar. Das Fluidventil 324 ist insbesondere über ein hier nicht dargestelltes Steuergerät 900 steuerbar. Durch ein Ansteuern des Druckluftventils 338 und des Fluidventils 334 kann ein Verfahren gemäß dem Konzept der Erfindung zur Reinigung der Sensoroberfläche 300 über ein Steuergerät 900 in automatisierter Weise erfolgen. Die Fluidleitung 332 ist mit einem hier nicht dargestellten Fluidtank 316 verbunden. Wenn durch Schließen des Fluidventils 324 kein Reinigungsfluid M2 in die Kolbeneinheit 322 geleitet wurde, wird bei Druckbeaufschlagung des Druckanschlusses 336 anstatt des Reinigungsfluides M2 eine Druckluftmenge M1 über die Düse 320, insbesondere zur Durchführung eines Luft-Reinigungsschrittes, auf die Sensoroberfläche 300 geleitet.

In bevorzugten Weiterbildungen kann die Kombinationseinheit 328 und/oder die Kolbeneinheit 322 als Venturi-Einheit 323 ausgebildet sein, in der die Reinigungsfluidmenge M2 mit der Druckluftmenge M1 oder einer anderen Druckluftmenge zu einem Reinigungs-Gemisch MG vermischt wird und als solches über die gemeinsame Mediumsleitung 312 auf die Sensoroberfläche 300 geleitet wird. Hierzu werden das Fluidventil 324 und das Druckluftventil 338 gleichzeitig geöffnet. Wenn das Fluidventil 324 geschlossen und das Druckluftventil 338 geöffnet ist, wird hingegen lediglich Druckluft, insbesondere eine Druckluftmenge M1, durch die Venturi-Einheit 323 und die gemeinsame Mediumsleitung 312 auf die Sensoroberfläche 300 geleitet.

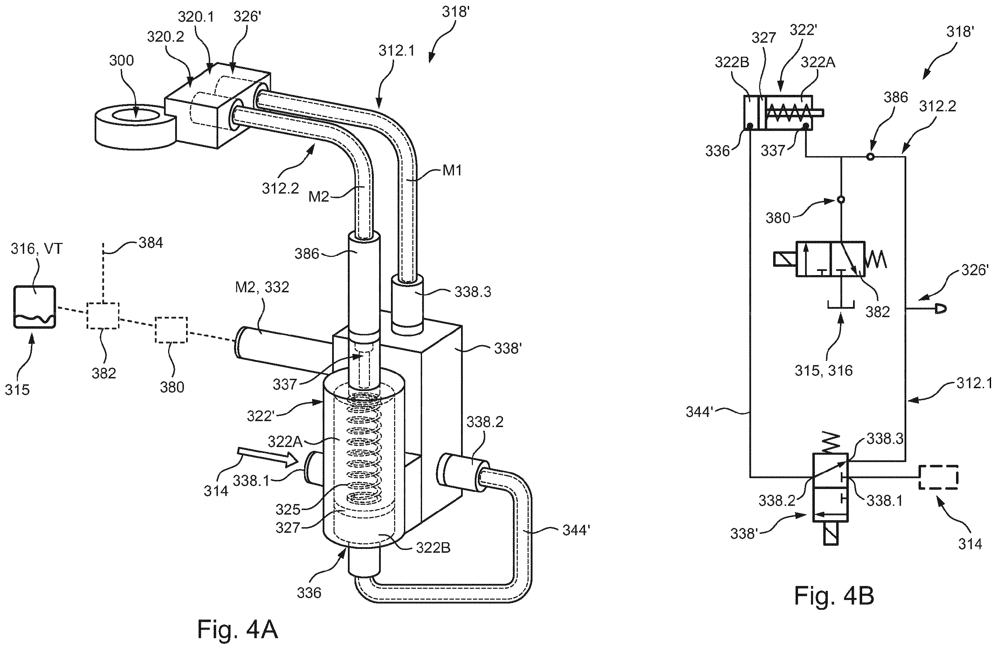

Fig. 4A zeigt eine weitere Weiterbildung einer Reinigungsvorrichtung 318' für ein Reinigungssystem 100 gemäß dem Konzept der Erfindung. Im Unterschied zu der in Fig. 3 gezeigten Weiterbildung weist die Reinigungsvorrichtung 318' anstelle einer gemeinsamen Mediumsleitung 312 eine erste Mediumsleitung 312.1 für eine Druckluftmenge M1 und eine zweite Mediumsleitung 312.2 für eine Reinigungsfluidmenge M2 auf. Das Applikationsmodul 326' weist entsprechend eine erste Düse 320.1 auf, die mit der ersten Mediumsleitung 312.1 fluidführend verbunden ist und eine zweite Düse 320.2, die mit der zweiten Mediumsleitung 312.2 fluidführend verbunden ist. Die Reinigungsvorrichtung 318' weist, analog zur in Fig. 3 gezeigten Weiterbildung, eine Kolbeneinheit 322' auf. Die Kolbeneinheit 322' weist eine Fluidkammer 322A und eine Luftkammer 322B auf, die über einen axial bewegbaren Druckstempel 327 voneinander getrennt sind. Der Druckstempel 327 ist weiter über eine in der Fluidkammer 322A angeordnete Rückstellfeder 325 mit dem Gehäuse der Kolbeneinheit 322' verbunden. Die zweite Mediumsleitung 312.2 ist über einen Fluidanschluss 337 an die Fluidkammer 322A der Kolbeneinheit 322' angeschlossen. Die Luftkammer 322B kann über einen Druckanschluss 336 mit Luftdruck beaufschlagt werden, wodurch sich das Volumen der Luftkammer 322B unter axialer Bewegung des Druckstempels 327 verändert, um eine in der Fluidkammer 322A befindliche Reinigungsfluidmenge M2 unter Druck und gegen die Rückstellfeder 325 über die zweite Düse 320.2 auf die Sensoroberfläche 300 zu leiten. Die Reinigungsvorrichtung 318' weist ein Druckluftventil 338' auf. Die zweite Mediumsleitung 312.2 kann ein Fluid-Rückschlagventil 386 aufweisen, das in der Strömungsrichtung von der Kolbeneinheit 322' zum Applikationsmodul 326' öffnet und in Gegenrichtung sperrt.

Wenn eine Druckluftbeaufschlagung über den Druckanschluss 336 unterbrochen wird, wird der Druckstempel 327 über die Rückstellfeder 325 zurück in eine Ausgangsstellung gedrückt, wodurch die Kolbeneinheit 322' neues Reinigungsfluid M2 ansaugt. Die Kolbeneinheit 322' kann über eine Fluidleitung 332 befüllt werden. Das Druckluftventil 338'ist über ein hier nicht dargestelltes Steuergerät 900 steuerbar und dient zum einen zur Bereitstellung der Druckluftmenge M1 an die erste Düse 320.1 über die erste Mediumsleitung 312.1, und zum anderen zum Beaufschlagen des Druckanschlusses 336 der Kolbeneinheit 322' über eine Kolbeneinheits-Leitung 344, um die Reinigungsfluidmenge M2 über die zweite Düse 320.2 auf die Sensoroberfläche 300 zu leiten. Das Druckluftventil 338' kann insbesondere als 3/2-Wege Magnetventil ausgebildet sein, dass wahlweise in einer ersten Stellung eine an einem ersten Druckluftventilanschluss 338.1 anliegende Druckluftmenge M1 über einen zweiten Druckluftventilanschluss 338.2 zum Druckanschluss 336 der Kolbeneinheit 322' leiten kann, oder in einer zweiten Stellung den zweiten Druckluftventilanschluss 338.2 pneumatisch mit einem dritten Druckluftventilanschluss 338.3 verbinden kann, um die von der Rückstellfeder 325 aus der Kolbeneinheit 322' gedrückte Druckluftmenge M1 über die erste Mediumsleitung 312.1 und die erste Düse 320.1 auf die Sensoroberfläche zu leiten. Durch die Funktionsweise der Kolbeneinheit 322' kann vorteilhaft eine Weiterbildung des Verfahrens realisiert werden, in der pro Reinigungszyklus eine identische Menge von Druckluftmenge M1 und Reinigungsfluidmenge M2 abgegeben wird, da das vom Druckstempel 327 verdrängte Volumen an Reinigungsfluid M2 dem beim Rückstellvorgang durch die Rückstellfeder 325 verdrängten Volumen an Druckluft M1 entspricht. Insbesondere kann in einer Weiterbildung mit einer Kolbeneinheit 322' die Druckluftmenge M1 und die Reinigungsfluidmenge M2 gemeinsam über die Druckluftmenge M1 bestimmt werden, insbesondere über eine Schaltdauer des Druckluftventils 338', insbesondere derart, dass nicht beide Mengen M1, M2 nicht dem vollen Volumen der Kolbeneinheit 322' entsprechen, indem das Druckluftventil 338' umgeschaltet wird, bevor das Reinigungsfluid vollständig aus der Kolbeneinheit 322' gedrückt wurde.

In der hier gezeigten Weiterbildung ist insbesondere kein Fluidventil notwendig, da eine selektive Beaufschlagung des Druckanschlusses 336 über das Druckluftventil 338' möglich ist, und die Mediumsleitungen 312.1, 312.2 separat geführt werden. Zur Versorgung der Reinigungsvorrichtung 318' ist das Druckluftventil 338' mit einer hier nicht dargestellten Druckluftquelle 314 verbunden. Die Fluidleitung 332 kann insbesondere ein Rückschlagventil 380 aufweisen, welches in der Strömungsrichtung des Reinigungsfluids M2 von einem Fluidtank 316 zur Reinigungsvorrichtung 318' öffnet und in Gegenrichtung sperrt. Weiterhin kann die Fluidleitung 332, insbesondere zwischen dem Rückschlagventil 380 und dem Fluidtank 316, ein 3/2-Wegeventil aufweisen, mittels dem in einer weiteren Ventilstellung wahlweise Luft über eine Belüftungsleitung 384 durch die Fluidleitung 332 zur Kolbeneinheit 322' geleitet werden kann, insbesondere wenn ein Luft-Reinigungsschritt, d.h. ohne Beaufschlagung dem Reinigungsfluid M2, erfolgen soll. Die Kolbeneinheit 322' fördert dann in beiden Richtungen Luft.

In Fig. 4B ist die in Fig. 4A dargestellte Weiterbildung schematisch als pneumatisches Schaltbild dargestellt, somit gelten die obigen Ausführungen entsprechend.

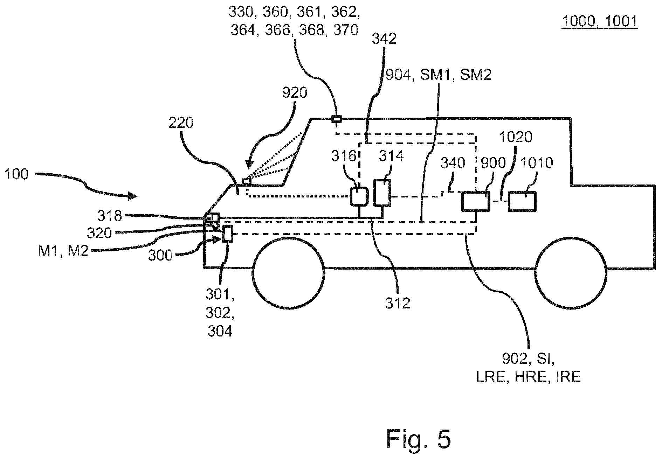

Fig. 5 zeigt eine schematische Darstellung eines Fahrzeugs 1000 - vorliegend in Form eines autonomen oder teilautonomen Fahrzeugs 1001 - aufweisend ein Reinigungssystem 100 für einen als optischen Sensor 302, nämlich als Kamera 304, ausgebildeten Sensor 301. Gleichwohl ist ein Einsatz des Reinigungssystems 100 in anderen Fahrzeugen, insbesondere konventionellen PKW oder LKW oder Zügen oder Motorrädern, möglich.

Das Reinigungssystem 100 weist ein Steuergerät 900 auf, welches mit einer Fahrzeugsteuerung 1010 über eine Fahrzeug-Steuerleitung 1020 signalführend verbunden ist. Das Steuergerät 900 ist über eine Steuerleitung 904 mit einer Reinigungsvorrichtung 318 signalführend verbunden, insbesondere zur Übermittlung eines Druckluftstellsignals SM1 und eines Reinigungsfluidstellsignal SM2. Über eine Mediumsleitung 312 sind weiterhin eine Druckluftquelle 314 und ein Fluidtank 316 mit der Reinigungsvorrichtung 318 fluidführend verbunden. Alternativ oder zusätzlich kann das Steuergerät 900 über eine weitere Steuerleitung 340 zur Übermittlung des Druckluftstellsignals SM1 auch direkt mit der Druckluftquelle 314 signalführend verbunden sein. Alternativ oder zusätzlich kann das Steuergerät 900 über eine noch weitere Steuerleitung 342 zur Übermittlung des Reinigungsfluidsteuersignals SM2 auch direkt mit dem Fluidtank 316 signalführend verbunden sein.

Die Reinigungsvorrichtung 318 weist eine Düse 320 auf, um eine Sensoroberfläche 300 des Sensors 301 mit einer Druckluftmenge M1 und/oder einer Reinigungsfluidmenge M2 zwecks Reinigung zu Beaufschlagen.

Der Fluidtank 316 kann für weitere Fahrzeugfunktionen verwendet werden, beispielsweise zur Versorgung einer Scheibenreinigungsanlage 920 oder dergleichen, weiteren Reinigungsanlage 220.

Das Steuergerät 900 kann in optionalen Weiterbildungen signalführend mit einem Regensensor 330 verbunden sein.

Über eine Sensorleitung 902 ist der Sensor 301 mit dem Steuergerät 900 signalführend, insbesondere zur Übermittlung eines Luft-Reinigungsergebnisses LRE und/oder eines Hybrid-Reinigungsergebnisses HRE und/oder eines Initial-Reinigungsergebnisses IRE verbunden.

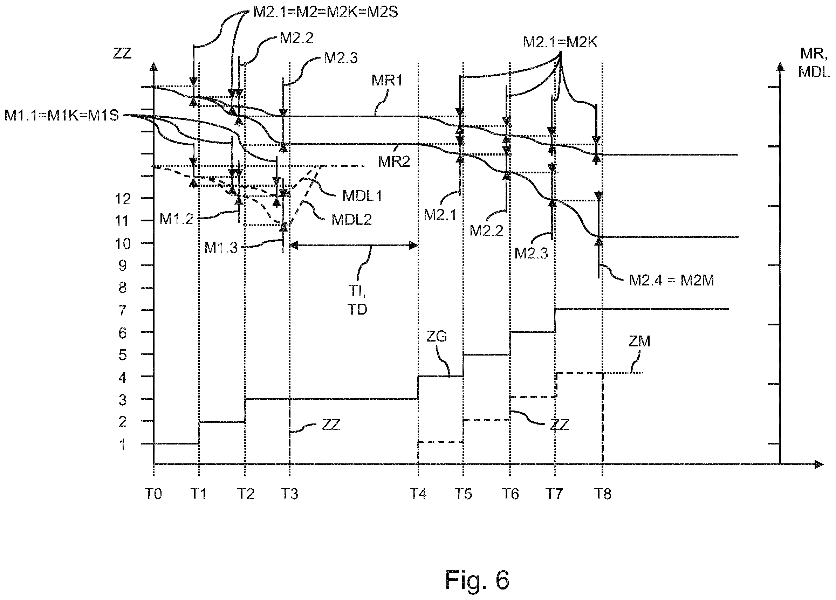

Fig. 6 zeigt einen schematischen Verlauf von beispielhaften Restfluidmengen MR1, MR2 und Zyklenzahlen ZZ, ZG über verschiedene Zeitpunkte T0 bis T8 für zwei beispielhafte Weiterbildungen eines Verfahrensablaufs. Zu einem Initial-Zeitpunkt T0 ist ein hier nicht dargestellter Fluidtank 316 voll befüllt, wodurch sich bei einer ersten Weiterbildung des Verfahrensablaufs eine erste Restfluidmenge MR1 an einem Maximum befindet. Es erfolgt, insbesondere im Rahmen einer Schrittfolge 440, ein erster Fluid-Reinigungsschritt 414, bei dem eine erste Reinigungsfluidmenge M2.1 verbraucht wird, wodurch die erste Restfluidmenge MR1 um den entsprechenden Betrag reduziert wird. In der ersten gezeigten Weiterbildung ist die Reinigungsfluidmenge M2 eine konstante Reinigungsfluidmenge M2K, das heißt sie bleibt unabhängig von der Zyklenzahl ZZ konstant. Im Verlauf eines Reinigungsverfahrens 400, welches hier nicht näher gezeigt ist, erfolgt zu einem ersten Zeitpunkt T1 und zu einem zweiten Zeitpunkt T2, insbesondere aufgrund eines Negativen Hybrid-Reinigungsergebnisses HRE, jeweils ein weiterer Fluid-Reinigungsschritt 414, bei dem jeweils eine weitere, konstante Reinigungsfluidmenge M2K verbraucht wird und sich die erste Restfluidmenge MR1 entsprechend schrittweise verringert. Gleichzeitig wird die Zyklenzahl ZZ mit jedem Fluid-Reinigungsschritt innerhalb einer Durchführung des Verfahrens um die Zahl 1 erhöht. Zu einem dritten Zeitpunkt T3 wird die Durchführung des Verfahrens, insbesondere aufgrund eines positiven hybrid-Reinigungsergebnisses HRE, beendet, wodurch die erste Restfluidmenge MR1 zunächst konstant bleibt und die Zyklenzahl ZZ wieder auf Null gesetzt wird. Die Gesamtzyklenzahl ZG bleibt hingegen konstant auf dem Wert 3 stehen.

Nach einem Zeitintervall TI zwischen zwei Durchführungen des Reinigungsverfahrens, welches vorliegend beispielhaft auch einem durchschnittlichen Zeitintervall TD zwischen zwei Durchführungen des Reinigungsverfahrens entspricht, erfolgt zu einem vierten Zeitpunkt T4 eine erneute Durchführung des Reinigungsverfahrens. Bei der erneuten Durchführung des Reinigungsverfahrens wird in vier Fluid-Reinigungsschritten 414 die erste Restfluidmenge MR1 jeweils um die konstante Reinigungsfluidmenge M2K verringert und die Zyklenzahl ZZ wieder erneut von 0 in jedem Fluid-Reinigungsschritt 414 um 1 erhöht. Zu einem achten Zeitpunkt T8 wird das Verfahren aufgrund des Erreichens eines Maximalwertes ZM der Zyklenzahl ZZ abgebrochen. Vorliegend beträgt der Maximalwert ZM gleich 4. Die Gesamtzyklenzahl ZG wird dabei weiter, ausgehend von dem - in der vorherigen Durchführung erreichten - Wert 3, um die Zahl 4 auf den Wert 7 erhöht.

In einer zweiten hier gezeigten Weiterbildung des Verfahrens wird der Verlauf einer zweiten Restfluidmenge MR2 dargestellt. Im Unterschied zur ersten gezeigten Weiterbildung mit der ersten Restfluidmenge MR1 ist in der zweiten, alternativ möglichen Weiterbildung des Verfahrens die Reinigungsfluidmenge M2 nicht konstant, sondern abhängig von der Zyklenzahl ZZ. Zum Initial-Zeitpunkt T0 entspricht eine erste Reinigungsfluidmenge M2.1 einer Start-Reinigungsfluidmenge M2S, welche vorliegend gleichzeitig der konstanten Reinigungsfluidmenge M2K entspricht, gleichwohl aber auch von dieser abweichen kann.

Bei der zweiten Durchführung des Fluid-Reinigungsschrittes 414 zum ersten Zeitpunkt T1 beträgt die Zyklenzahl ZZ bereits 1, wodurch die Reinigungsfluidmenge auf eine zweite Reinigungsfluidmenge M 2.2 erhöht wird. Vorliegend ist die zweite Reinigungsfluidmenge M2.2 um den Betrag der ersten Reinigungsfluidmenge 2.1 erhöht, also verdoppelt, wodurch die zweite Restfluidmenge MR2 entsprechend um den doppelten Betrag verringert wird. Analog dazu wird bei einer dritten Durchführung des Fluid-Reinigungsschrittes 414 zu einem zweiten Zeitpunkt T2 - die Zyklenzahl ZZ ist zu diesem Zeitpunkt erneut um 1 auf die Zahl 2 erhöht worden - die Reinigungsfluidmenge M2 - wieder um den Betrag der ersten Reinigungsfluidmenge 2.1 - auf eine dritte Reinigungsfluidmenge M2.3 erhöht. Die zweite Restfluidmenge MR2 wird entsprechend um den Betrag der dritten Reinigungsfluidmenge M2.3 verringert.

Zum vierten Zeitpunkt T4 findet eine erneute Durchführung des Verfahrens statt, indem in analoger Weise in vier aufeinanderfolgenden Fluid-Reinigungsschritten 414 die Reinigungsfluidmenge M2 von einer ersten Reinigungsfluidmenge M2.1 bis zu einer vierten Reinigungsfluidmenge M2.4 in Abhängigkeit der Zyklenzahl ZZ erhöht wird. Mit Erreichen der vierten Reinigungsfluidmenge M2.4 ist eine Maximal-Reinigungsfluidmenge M2M erreicht, wodurch - innerhalb dieser Durchführung des Verfahrens - keine weitere Erhöhung der Reinigungsfluidmenge M2 erfolgt. Das bedeutet, sollten ab diesem, vorliegend vierten, Fluid-Reinigungsschritt 414 weitere Fluid-Reinigungsschritte 414 erfolgen, würden diese ebenfalls mit der vierten Reinigungsfluidmenge M2.4 durchgeführt werden. Vorliegend ist jedoch gleichzeitig auch der Maximalwert ZM der Zyklenzahl ZZ erreicht, wodurch eine Abbruchbedingung erreicht ist und die Durchführung des Verfahrens beendet wird.

Weiterhin ist in Fig. 6 beispielhaft der Verlauf zweier Gesamt-Druckluftmengen, nämlich einer ersten Gesamt-Druckluftmenge MDL1 und einer zweiten Gesamt-Druckluftmenge MDL2, gestrichelt dargestellt. Der erste Verlauf der Gesamt-Druckluftmenge MDL1 stellt dabei den Verlauf in einer Weiterbildung des Verfahrens mit einer konstanten Druckluftmenge M1K dar. Hierbei wird ausgehend vom Initial-Zeitpunkt T0, in drei Reinigungszyklen jeweils eine erste Druckluftmenge M1.1 als konstante Druckluftmenge M1K abgegeben. Insbesondere wird die jeweilige Druckluftmenge M1.1 in einem Reinigungszyklus jeweils nach einer entsprechenden Reinigungsfluidmenge M2 auf die Sensoroberfläche abgegeben. Zum dritten Zeitpunkt T3 erfolgt keine Beaufschlagung mehr mit Druckluft, insbesondere aufgrund eines positiven hybrid-Reinigungsergebnisses HRE, oder weil ein Maximalwert ZM der Zyklenzahl ZZ erreicht ist. Anschließend wird die erste Gesamt-Druckluftmenge MDL1, die insbesondere einer Menge von Druckluft in einer Kolbeneinheit oder in einem Druckluftvorratsbehälter der Druckluftquelle entspricht, insbesondere durch ein Befüllen der Kolbeneinheit und/oder das Betreiben eines Verdichters der Druckluftquelle wieder auf ein Ausgangsniveau erhöht. Insbesondere im Gegensatz zu einer Restfluidmenge MR1, MR2 kann der Vorrat an Druckluft während des Betriebs des Fahrzeugs wieder aufgefüllt werden.

Als zweites Beispiel für ein Erhöhen der Druckluftmenge in Abhängigkeit der Zyklenzahl ZZ wird der Verlauf der zweiten Gesamt-Druckluftmenge MDL2 dargestellt. Bei diesem Verlauf wird - analog zum Verlauf der Restfluidmenge MR2 - die Druckluftmenge von einer ersten Druckluftmenge M 1.1 als Start-Druckluftmenge M1S zum Initial-Zeitpunkt T0, über eine zweite Druckluftmenge M1.2 zum ersten Zeitpunkt T1 bis zu einer dritten Druckluftmenge M1.3 zum zweiten Zeitpunkt T2 erhöht. Zum dritten Zeitpunkt T3 findet keine Beaufschlagung mit Druckluft mehr statt, und die Gesamt-Druckluftmenge MDL2 wird, insbesondere durch ein Befüllen der Kolbeneinheit und/oder Betreiben eines Verdichters, wieder zu einem Ausgangsniveau erhöht.

### Bezugszeichenliste (Teil der Beschreibung)

- 100: Reinigungssystem
- 220: weitere Reinigungsanlage
- 300: Sensoroberfläche
- 301: Sensor
- 302: optischer Sensor
- 304: Kamera
- 310: Schmutz, Verschmutzung
- 312: Mediumsleitung
- 312.1, 312.2: erste, zweite Mediumsleitung
- 314: Druckluftquelle
- 315: Reinigungsfluidquelle
- 316: Fluidtank
- 318, 318': Reinigungsvorrichtung
- 320: Düse
- 320.1, 320.2: erste, zweite Düse
- 322, 322': Kolbeneinheit
- 323: Venturi-Einheit
- 324: Fluidventil
- 325: Rückstellfeder
- 326: Applikationsmodul
- 327: Druckstempel
- 328: Kombinationseinheit
- 330: Regensensor
- 332: Fluidleitung
- 334: Fluidventil
- 336: Druckanschluss
- 337: Fluidanschluss
- 338, 338': Druckluftventil
- 338.1 bis 338.3: erster bis dritter Druckluftventilanschluss
- 340: weitere Steuerleitung
- 342: noch weitere Steuerleitung
- 344, 344': Kolbeneinheits-Leitung
- 346: Füllstandssensor
- 348: Sensorauswerteeinrichtung
- 349: Soll-Ist-Vergleichsmodul
- 349.1: Helligkeits-Vergleichsmodul
- 349.2: Kamerabild-Vergleichsmodul
- 349.3: Kontrast-Vergleichsmodul
- 350: Soll-Ist-Vergleich
- 360: Thermometer

- 361: Außenthermometer
- 362: Scheibenwischer-Steuergerät
- 364: Frontscheiben-Heizung-Steuergerät
- 366: Heckscheiben-Heizung-Steuergerät
- 368: Anti-Blockier-System (ABS)-Steuergerät
- 370: Steuergerät für eine elektronische Stabilitätskontrolle (ESP)
- 380: Rückschlagventil
- 382: 3/2-Wegeventil
- 384: Belüftungsleitung
- 386: Fluid-Rückschlagventil
- 400: Verfahren
- 402: Startschritt
- 410: Initial-Prüfschritt
- 412: Luft-Reinigungsschritt
- 413: Prüfschritt
- 414: Fluid-, insbesondere Flüssigkeits-, Reinigungsschritt
- 416: weiterer Luft-Reinigungsschritt
- 417: weiterer Prüfschritt
- 418: Zählschritt
- 420: Fehlerschritt
- 422: Notlauf-Schritt
- 424: Abbruchschritt
- 430: hybrider Reinigungsschritt
- 440: Schrittfolge
- 442: Zusatz-Luftreinigungsablauf
- 444: Zusatz-Luft-Reinigungsschritt
- 446: Zusatz-Prüfschritt
- 448: Zusatz-Zählschritt
- 900: Steuergerät
- 902: Sensorleitung
- 903: Auswerteleitung
- 904: Steuerleitung
- 906: Systemleitung
- 910: Programmspeicher
- 912: Umgebungsbestimmungseinheit
- 920: Scheibenreinigungsanlage
- 930: weiterer Sensor
- 932: weitere Kamera
- 940: Referenzspeicher
- 950: Auslöseschalter
- 952: Kommunikationsschnittstelle
- 954: Fahrzeugbus
- 956: drahtlose Kommunikationseinrichtung
- 1000: Fahrzeug
- 1001: autonomes Fahrzeug
- 1010: Fahrzeugsteuerung
- 1020: Fahrzeug-Steuerleitung

- AB: Abbruchbedingung
- AB1: erste Abbruchbedingung
- AB2: zweite Abbruchbedingung
- AB3: Zusatz-Abbruchbedingung
- IRE: Initial-Reinigungsergebnis
- LRE: Luft-Reinigungsergebnis
- HRE: Hybrid-Reinigungsergebnis
- HW: Helligkeitswert
- HWA: Helligkeitsabweichung
- HWD: durchschnittlicher Helligkeitswert
- HWDV: durchschnittlicher Vergleichs-Helligkeitswert
- M1: Druckluftmenge
- M1.1 bis M1.3: erste bis vierte Druckluftmenge
- M1K: konstante Druckluftmenge
- M1M: Maximal-Druckluftmenge
- M1S: Start-Druckluftmenge
- M1Z: Zusatz-Druckluftmenge
- M2: Reinigungsfluidmenge
- M2.1 bis M2.4: erste bis vierte Reinigungsfluidmenge
- M2K: konstante Reinigungsfluidmenge
- M2M: Maximal-Reinigungsfluidmenge
- M2S: Start-Reinigungsfluidmenge
- MDL: Gesamt-Druckluftmenge
- MDL1, MDL2: erste, zweite Gesamt-Druckluftmenge
- MG: Reinigungs-Gemisch
- MR: Restfluidmenge
- MR1, MR2: erste, zweite Restfluidmenge
- PX: Pixel
- RE: Reinigungsergebnis
- SC: Reinigungssignal
- SI: Sensorsignal
- SIK: Kamerasignal, Kamerabild
- SIR: Referenz-Sensorsignal
- SIV: Vergleichs-Sensorsignal
- SIKV: Vergleichs-Kamerasignal, Vergleichs-Kamerabild
- SM1: Druckluftstellsignal
- SM2: Reinigungsfluidstellsignal
- SR: Regensignal
- SSI: Ist-Signal
- SSS: Soll-Signal
- SU: Umgebungssignal
- T0: Initial-Zeitpunkt
- T1 bis T8: erster bis achter Zeitpunkt
- TB: Teilbereich
- TB2: weiterer Teilbereich
- TD: durchschnittliches Zeitintervall zwischen zwei Durchführungen des Reinigungsverfahrens
- TI: Zeitintervall zwischen zwei Durchführungen des Reinigungsverfahrens
- TR: Restbetriebszeit
- TW: Wartezeit
- UZ: Uhrzeit
- V1 bis V7: erste bis siebte Verzweigung
- VT: Tankvolumen
- ZM: Maximalwert der Zyklenzahl
- ZG: Gesamtzyklenzahl
- ZZ: Zyklenzahl
- ZZM: Zusatz-Maximalwert
- ZZZ: Zusatz-Zyklenzahl

## Patentansprüche

1. Verfahren (400) zum Betreiben eines Reinigungssystems (100) zum Reinigen einer Sensoroberfläche (300) eines Sensors (301) eines Fahrzeugs (1000), insbesondere eines optischen Sensors (302), aufweisend den Schritt:
- Beaufschlagen der Sensoroberfläche (300) mit einer Druckluftmenge (M1) in einem Luft-Reinigungsschritt (412),
- Prüfen eines Luft-Reinigungsergebnisses (LRE) in einem Prüfschritt (413),
- bei einem negativen Luft-Reinigungsergebnis (LRE), Durchführen eines hybriden Reinigungsschrittes (430) aufweisend:
- Beaufschlagen der Sensoroberfläche (300) mit einer Reinigungsfluidmenge (M2) in einem Fluid-Reinigungsschritt (414) und
- Beaufschlagen der Sensoroberfläche (300) mit einer Druckluftmenge (M1) in einem weiteren Luft-Reinigungsschritt (416), wobei
- durchgeführte Fluid-Reinigungsschritte (414) erfasst werden, und
- eine Zyklenzahl (ZZ) von durchgeführten Fluid-Reinigungsschritten (414) erfasst wird, die nach jedem Fluid-Reinigungsschritt (414) erhöht wird,
**dadurch gekennzeichnet, dass**
die Reinigungsfluidmenge (M2) abhängig ist von der Zyklenzahl (ZZ) derart, dass eine höhere Zyklenzahl (ZZ) zu einer größeren Reinigungsfluidmenge (M2) führt, und
die Druckluftmenge (M1) abhängig ist von der Zyklenzahl (ZZ) derart, dass eine höhere Zyklenzahl (ZZ) zu einer größeren Druckluftmenge (M1) führt.

2. Verfahren (400) nach Anspruch 1, **dadurch gekennzeichnet, dass**
- das Beaufschlagen der Sensoroberfläche (300) mit einer Druckluftmenge (M1) in dem weiteren Luft-Reinigungsschritt (416) anschließend an den Fluid-Reinigungsschritt (414) erfolgt.

3. Verfahren (400) nach Anspruch 1, **dadurch gekennzeichnet, dass**
- die Reinigungsfluidmenge (M2) bis zu einer Maximal-Reinigungsfluidmenge (M2M) erhöht wird.

4. Verfahren (400) nach einem der Ansprüche 1 bis 3, **dadurch gekennzeichnet, dass** der Fluid- Reinigungsschritt (414) ein Flüssigkeits-Reinigungsschritt (414) ist.

5. Verfahren (400) nach einem der Ansprüche 1 bis 4, **dadurch gekennzeichnet, dass**
- die Druckluftmenge (M1 ) bis zu einer Maximal-Druckluftmenge (M1M) erhöht wird.

6. Verfahren (400) nach einem der vorherigen Ansprüche, **dadurch gekennzeichnet, dass**
- eine Schrittfolge (440), die den hybriden Reinigungsschritt (430) umfasst, nach dem hybriden Reinigungsschritt (430) weiter den Schritt aufweist: Prüfen des Hybrid-Reinigungsergebnisses (HRE) in einem weiteren Prüfschritt (417), wobei
- die Schrittfolge (440) wiederholt wird, bis eine Abbruchbedingung (AB) erreicht ist.

7. Verfahren (400) nach Anspruch 6, **dadurch gekennzeichnet, dass** die Abbruchbedingung (AB) erreicht ist, wenn als erste Abbruchbedingung (AB1) das Hybrid-Reinigungsergebnis (HRE) positiv ist oder als zweite Abbruchbedingung (AB2) die Zyklenzahl (ZZ) einen Maximalwert (ZM) erreicht hat.

8. Verfahren (400) nach einem der vorherigen Ansprüche, **dadurch gekennzeichnet, dass** der Prüfschritt (413) zum Prüfen des Luft-Reinigungsergebnisses (LRE) und/oder der weitere Prüfschritt (417) zum Prüfen des Hybrid-Reinigungsergebnisses (HRE) über den Sensor (301) und/oder dessen Auswerteeinrichtung (348), erfolgt.

9. Verfahren (400) nach einem der vorherigen Ansprüche, **dadurch gekennzeichnet, dass**
- der Prüfschritt (413) oder der weitere Prüfschritt (417) während des Luft-Reinigungsschrittes (412) oder des weiteren Luft-Reinigungsschrittes (416) oder
- innerhalb einer Wartezeit (TW) nach dem Luft-Reinigungsschritt (412) oder dem weiteren Luft-Reinigungsschritt (416) erfolgt.

10. Verfahren (400) nach Anspruch 9, **dadurch gekennzeichnet, dass** die Wartezeit (TW) 500 ms beträgt.

11. Verfahren (400) nach einem der vorherigen Ansprüche, **dadurch gekennzeichnet, dass** das Verfahren (400) bei einem negativen Initial-Reinigungsergebnis (IRE) eines Initial-Prüfschrittes (410) ausgeführt wird.

12. Verfahren (400) nach einem der vorherigen Ansprüche, **dadurch gekennzeichnet, dass** das Verfahren (400) bei einem positiven Regensignal (SR) eines Regensensors (330) ausgeführt wird.

13. Verfahren (400) nach einem der vorherigen Ansprüche, **dadurch gekennzeichnet, dass** eine Restfluidmenge (MR) und/oder Restbetriebszeit (TR) des Reinigungssystems (100) bestimmt wird, wobei die Bestimmung insbesondere auf Basis einer Restzyklenzahl (ZR) oder einer Gesamtzyklenzahl (ZG) erfolgt.

14. Verfahren nach einem der vorherigen Ansprüche, **dadurch gekennzeichnet, dass** nach dem Prüfen des Luft-Reinigungsergebnisses (LRE) in dem Prüfschritt (413), bei einem negativen Luft-Reinigungsergebnis (LRE) vor dem hybriden Reinigungsschrit (430) zusätzlich ein Zusatz-Luftreinigungsablauf (442) erfolgt, der die Schritte aufweist:
- Beaufschlagen der Sensoroberfläche (300) mit einer Zusatz-Druckluftmenge (M1Z) in einem Zusatz-Luft-Reinigungsschritt (444), und
- Prüfen des Luft-Reinigungsergebnisses (LRE) in einem Zusatz-Prüfschritt (446).

15. Verfahren (400) nach Anspruch 14, **dadurch gekennzeichnet, dass**
- der Zusatz-Luftreinigungsablauf (442) wiederholt wird, bis das Luft-Reinigungsergebnis (LRE) positiv ist oder eine Zusatz-Abbruchbedingung (AB3) erreicht ist.

16. Verfahren nach einem der vorherigen Ansprüche, **dadurch gekennzeichnet, dass**
- das Reinigungssignal (SC) und/oder das Reinigungsergebnis (RE, LRE, HRE, IRE) in Abhängigkeit eines Soll-Ist-Vergleiches (350) zwischen einem Ist-Signal (SSI) und einem Soll-Signal (SSS) gebildet wird, insbesondere in Abhängigkeit einer Helligkeitsabweichung (HWA) und/oder einer Kontrastabweichung (KA).

17. Verfahren (400) nach Anspruch 16, **dadurch gekennzeichnet, dass**
- das Ist-Signal (SSI) durch das Sensorsignal (SI) gebildet wird, und
- das Soll-Signal (SSS) durch ein Vergleichs-Sensorsignal (SIV), das von mindestens einem weiteren Sensor (930) bereitgestellt wird, und/oder durch ein Referenz-Sensorsignal (SIR), das von einem Referenzspeicher (940) bereitgestellt wird, gebildet wird.

18. Reinigungssystem (100) zum Reinigen einer Sensoroberfläche (300) eines Sensors (301), insbesondere optischen Sensors (302), in einem Fahrzeug (1000), aufweisend eine Reinigungsvorrichtung (318) und ein Steuergerät (900), ausgebildet zum Ausführen eines Verfahrens (400) nach einem der vorhergehenden Ansprüche.

19. Reinigungssystem (100) nach Anspruch 18, **gekennzeichnet durch** eine gemeinsame Düse (320) zum Beaufschlagen der Sensoroberfläche (300) mit einer Druckluftmenge (M1) und einer Reinigungsfluidmenge (M2).

20. Reinigungssystem (100) nach Anspruch 18 oder 19, **gekennzeichnet, durch** eine Kommunikationsschnittstelle (952), die ausgebildet ist zur Kommunikation mit einem Fahrzeugbus (954) und/oder einer drahtlosen Kommunikationseinrichtung (956).

21. Reinigungssystem (100) nach einem der Ansprüche 18 bis 20, **gekennzeichnet durch** eine Sensorauswerteeinrichtung (348), wobei die Sensorauswerteeinrichtung (348) ein Soll-Ist-Vergleichsmodul (349) und/oder ein Helligkeits-Vergleichsmodul (349.1) und/oder ein Kamerabild-Vergleichsmodul (349.2) und/oder ein Kontrast-Vergleichsmodul (349.3) aufweist.

22. Fahrzeug (1000) mit einem Reinigungssystem (100) nach einem der Ansprüche 18 bis 21.

## Claims

1. Method (400) for operating a cleaning system (100) for cleaning a sensor surface (300) of a sensor (301) of a vehicle (1000), in particular an optical sensor (302), comprising the step of:
- applying a compressed air quantity (M1) to the sensor surface (300) in an air cleaning step (412),
- checking an air cleaning result (LRE) in a checking step (413),
- in the case of a negative air cleaning result (LRE), performing a hybrid cleaning step (430) comprising:
- applying a cleaning fluid quantity (M2) to the sensor surface (300) in a fluid cleaning step (414) and
- applying a compressed air quantity (M1) to the sensor surface (300) in a further air cleaning step (416),
- performed fluid cleaning steps (414) being recorded, and
- a number (ZZ) of cycles of performed fluid cleaning steps (414) being recorded, which is increased after each fluid cleaning step (414),
**characterized in that**
the cleaning fluid quantity (M2) depends on the number (ZZ) of cycles such that a higher number (ZZ) of cycles results in a larger cleaning fluid quantity (M2), and
the compressed air quantity (M1) depends on the number (ZZ) of cycles such that a higher number (ZZ) of cycles results in a larger compressed air quantity (M1).

2. Method (400) according to claim 1, **characterized in that**
- a compressed air quantity (M1) is applied to the sensor surface (300) in the further air cleaning step (416) following the fluid cleaning step (414).

3. Method (400) according to claim 1, **characterized in that**
- the cleaning fluid quantity (M2) is increased up to a maximum cleaning fluid quantity (M2M).

4. Method (400) according to any of claims 1 to 3, **characterized in that** the fluid cleaning step (414) is a liquid cleaning step (414).

5. Method (400) according to any of claims 1 to 4, **characterized in that**
- the compressed air quantity (M1) is increased up to a maximum compressed air quantity (M1M).

6. Method (400) according to any of the preceding claims,
**characterized in that**
- a step sequence (440) comprising the hybrid cleaning step (430) further comprises, after the hybrid cleaning step (430), the step of: checking the hybrid cleaning result (HRE) in a further checking step (417),
- the step sequence (440) being repeated until a termination condition (AB) is met.

7. Method (400) according to claim 6, **characterized in that** the termination condition (AB) is met if, as the first termination condition (AB1), the hybrid cleaning result (HRE) is positive or, as the second termination condition (AB2), the number (ZZ) of cycles has reached a maximum value (ZM).

8. Method (400) according to any of the preceding claims,
**characterized in that** the checking step (413) for checking the air cleaning result (LRE) and/or the further checking step (417) for checking the hybrid cleaning result (HRE) is carried out via the sensor (301) and/or the evaluation device (348) thereof.

9. Method (400) according to any of the preceding claims,
**characterized in that**
- the checking step (413) or the further checking step (417) is carried out during the air cleaning step (412) or the further air cleaning step (416) or
- within a waiting period (TW) after the air cleaning step (412) or the further air cleaning step (416).

10. Method (400) according to claim 9, **characterized in that** the waiting period (TW) is 500 ms.

11. Method (400) according to any of the preceding claims,
**characterized in that** the method (400) is carried out in the case of a negative initial cleaning result (IRE) from an initial checking step (410).

12. Method (400) according to any of the preceding claims,
**characterized in that** the method (400) is carried out in the case of a positive rain signal (SR) from a rain sensor (330).

13. Method (400) according to any of the preceding claims,
**characterized in that** a remaining fluid quantity (MR) and/or a remaining operating time (TR) of the cleaning system (100) is determined, in particular being determined on the basis of a remaining number (ZR) of cycles or a total number (ZG) of cycles.

14. Method according to any of the preceding claims, **characterized in that** after checking the air cleaning result (LRE) in the checking step (413), in the case of a negative air cleaning result (LRE) before the hybrid cleaning step (430), an additional air cleaning process (442) is carried out and comprises the steps of:
- applying an additional compressed air quantity (M1Z) to the sensor surface (300) in an additional air cleaning step (444), and
- checking the air cleaning result (LRE) in an additional checking step (446).

15. Method (400) according to claim 14, **characterized in that**
- the additional air cleaning process (442) is repeated until the air cleaning result (LRE) is positive or an additional termination condition (AB3) is met.

16. Method according to any of the preceding claims, **characterized in that**
- the cleaning signal (SC) and/or the cleaning result (RE, LRE, HRE, IRE) is formed on the basis of a target-actual comparison (350) between an actual signal (SSI) and a target signal (SSS), in particular on the basis of a brightness deviation (HWA) and/or a contrast deviation (KA).

17. Method (400) according to claim 16, **characterized in that**
- the actual signal (SSI) is formed by the sensor signal (SI), and
- the target signal (SSS) is formed by a comparison sensor signal (SIV) provided by at least one further sensor (930), and/or by a reference sensor signal (SIR) provided by a reference memory (940).

18. Cleaning system (100) for cleaning a sensor surface (300) of a sensor (301), in particular an optical sensor (302), in a vehicle (1000), comprising a cleaning apparatus (318) and a control unit (900) designed to carry out a method (400) according to any of the preceding claims.

19. Cleaning system (100) according to claim 18, **characterized by** a common nozzle (320) for applying a compressed air quantity (M1) and a cleaning fluid quantity (M2) to the sensor surface (300).

20. Cleaning system (100) according to claim 18 or 19, **characterized by** a communication interface (952) designed to communicate with a vehicle bus (954) and/or a wireless communication device (956).

21. Cleaning system (100) according to any of claims 18 to 20, **characterized by** a sensor evaluation device (348), the sensor evaluation device (348) having a target-actual comparison module (349) and/or a brightness comparison module (349.1) and/or a camera image comparison module (349.2) and/or a contrast comparison module (349.3).

22. Vehicle (1000) comprising a cleaning system (100) according to any of claims 18 to 21.

## Revendications

1. Procédé (400) permettant de faire fonctionner un système de nettoyage (100) pour le nettoyage d'une surface de capteur (300) d'un capteur (301) d'un véhicule (1000), en particulier un capteur optique (302), présentant les étapes consistant à :
- exposer la surface de capteur (300) à une quantité d'air comprimé (M1) au cours d'une étape de nettoyage à l'air (412),
- vérifier un résultat de nettoyage à l'air (LRE) au cours d'une étape de vérification (413),
- en cas d'un résultat de nettoyage à l'air (LRE) négatif, mettre en œuvre une étape de nettoyage hybride (430) présentant :
- l'exposition de la surface de capteur (300) à une quantité de fluide de nettoyage (M2) au cours d'une étape de nettoyage par fluide (414), et
- l'exposition de la surface de capteur (300) à une quantité d'air comprimé (M1) au cours d'une étape de nettoyage à l'air supplémentaire (416), dans lequel
- les étapes de nettoyage par fluide (414) mises en œuvre sont détectées, et
- un nombre de cycles (ZZ) d'étapes de nettoyage par fluide (414) mises en œuvre est détecté, lequel est augmenté après chaque étape de nettoyage par fluide (414),
**caractérisé en ce que**
la quantité de fluide de nettoyage (M2) dépend du nombre de cycles (ZZ) de telle sorte qu'un nombre de cycles (ZZ) plus élevé entraîne une plus grande quantité de fluide de nettoyage (M2), et
la quantité d'air comprimé (M1) dépend du nombre de cycles (ZZ) de telle sorte qu'un nombre de cycles (ZZ) plus élevé entraîne une plus grande quantité d'air comprimé (M1).

2. Procédé (400) selon la revendication 1, **caractérisé en ce que**
- l'exposition de la surface de capteur (300) à une quantité d'air comprimé (M1) au cours de l'étape de nettoyage à l'air supplémentaire (416) est effectuée après l'étape de nettoyage par fluide (414).

3. Procédé (400) selon la revendication 1, **caractérisé en ce que**
- la quantité de fluide de nettoyage (M2) est augmentée jusqu'à une quantité de fluide de nettoyage maximale (M2M).

4. Procédé (400) selon l'une des revendications 1 à 3,
**caractérisé en ce que** l'étape de nettoyage par fluide (414) est une étape de nettoyage par liquide (414).

5. Procédé (400) selon l'une des revendications 1 à 4,
**caractérisé en ce que**
- la quantité d'air comprimé (M1) est augmentée jusqu'à une quantité d'air comprimé maximale (M1M).

6. Procédé (400) selon l'une des revendications précédentes,
**caractérisé en ce que**
- une séquence d'étapes (440) comprenant l'étape de nettoyage hybride (430) présente en outre, après l'étape de nettoyage hybride (430), l'étape consistant à : vérifier le résultat de nettoyage hybride (HRE) au cours d'une étape de vérification supplémentaire (417), dans lequel
- la séquence d'étapes (440) est répétée jusqu'à ce qu'une condition d'interruption (AB) soit atteinte.

7. Procédé (400) selon la revendication 6, **caractérisé en ce que** la condition d'interruption (AB) est atteinte lorsque, comme première condition d'interruption (AB1), le résultat de nettoyage hybride (HRE) est positif ou, comme seconde condition d'interruption (AB2), le nombre de cycles (ZZ) a atteint une valeur maximale (ZM).

8. Procédé (400) selon l'une des revendications précédentes,
**caractérisé en ce que** l'étape de vérification (413) pour la vérification du résultat de nettoyage à l'air (LRE) et/ou l'étape de vérification supplémentaire (417) pour la vérification du résultat de nettoyage hybride (HRE) sont effectuées par l'intermédiaire du capteur (301) et/ou de son appareil d'évaluation (348).

9. Procédé (400) selon l'une des revendications précédentes,
**caractérisé en ce que**
- l'étape de vérification (413) ou l'étape de vérification supplémentaire (417) est effectuée pendant l'étape de nettoyage à l'air (412) ou l'étape de nettoyage à l'air supplémentaire (416), ou
- dans un temps d'attente (TW) après l'étape de nettoyage à l'air (412) ou l'étape de nettoyage à l'air supplémentaire (416).

10. Procédé (400) selon la revendication 9, **caractérisé en ce que** le temps d'attente (TW) est de 500 ms.

11. Procédé (400) selon l'une des revendications précédentes,
**caractérisé en ce que** le procédé (400) est mis en œuvre en cas d'un résultat de nettoyage initial (IRE) négatif d'une étape de vérification initiale (410).

12. Procédé (400) selon l'une des revendications précédentes,
**caractérisé en ce que** le procédé (400) est mis en œuvre en cas d'un signal de pluie (SR) positif d'un capteur de pluie (330).

13. Procédé (400) selon l'une des revendications précédentes,
**caractérisé en ce qu'**une quantité de fluide résiduelle (MR) et/ou un temps de fonctionnement résiduel (TR) du système de nettoyage (100) sont déterminés, dans lequel la détermination est en particulier effectuée sur la base d'un nombre de cycles résiduels (ZR) ou d'un nombre de cycles total (ZG).

14. Procédé selon l'une des revendications précédentes,
**caractérisé en ce que,** après la vérification du résultat de nettoyage à l'air (LRE) à l'étape de vérification (413), en cas d'un résultat de nettoyage à l'air (LRE) négatif avant l'étape de nettoyage hybride (430), une séquence de nettoyage à l'air additionnelle (442) est en outre effectuée, laquelle présente les étapes consistant à :
- exposer la surface de capteur (300) à une quantité d'air comprimé additionnelle (M1Z) au cours d'une étape de nettoyage à l'air additionnelle (444), et
- vérifier le résultat de nettoyage à l'air (LRE) au cours d'une étape de vérification supplémentaire (446).

15. Procédé (400) selon la revendication 14, **caractérisé en ce que**
- la séquence de nettoyage à l'air additionnelle (442) est répétée jusqu'à ce que le résultat de nettoyage à l'air (LRE) soit positif ou qu'une condition d'interruption additionnelle (AB3) soit atteinte.

16. Procédé selon l'une des revendications précédentes,
**caractérisé en ce que**
- le signal de nettoyage (SC) et/ou le résultat de nettoyage (RE, LRE, HRE, IRE) sont formés en fonction d'une comparaison valeur de consigne-valeur réelle (350) entre un signal réel (SSI) et un signal de consigne (SSS), en particulier en fonction d'un écart de luminosité (HWA) et/ou d'un écart de contraste (KA).

17. Procédé (400) selon la revendication 16, **caractérisé en ce que**
- le signal réel (SSI) est formé par le signal de capteur (SI), et
- le signal de consigne (SSS) est formé par un signal de capteur de comparaison (SIV), lequel est fourni par au moins un capteur supplémentaire (930), et/ou par un signal de capteur de référence (SIR), lequel est fourni par une mémoire de référence (940).

18. Système de nettoyage (100) pour le nettoyage d'une surface de capteur (300) d'un capteur (301), en particulier d'un capteur optique (302), dans un véhicule (1000), présentant un dispositif de nettoyage (318) et un appareil de commande (900), configuré pour mettre en œuvre un procédé (400) selon l'une des revendications précédentes.

19. Système de nettoyage (100) selon la revendication 18, **caractérisé par** une buse (320) commune pour l'exposition de la surface de capteur (300) à une quantité d'air comprimé (M1) et à une quantité de fluide de nettoyage (M2).

20. Système de nettoyage (100) selon la revendication 18 ou 19,
**caractérisé par** une interface de communication (952) configurée pour communiquer avec un bus de véhicule (954) et/ou un appareil de communication sans fil (956).

21. Système de nettoyage (100) selon l'une des revendications 18 à 20,
**caractérisé par** un appareil d'évaluation de capteur (348), dans lequel l'appareil d'évaluation de capteur (348) présente un module de comparaison valeur de consigne-valeur réelle (349) et/ou un module de comparaison de luminosité (349.1) et/ou un module de comparaison d'image de caméra (349.2) et/ou un module de comparaison de contraste (349.3).

22. Véhicule (1000) comportant un système de nettoyage (100) selon l'une des revendications 18 à 21.
